# EUROPEAN PATENT APPLICATION

(11) **EP 4 841 387 A1**
(43) Date of publication of application: **18.11.2026**
(21) Application number: 25772268.6
(22) Date of filing: 04.02.2025
(51) Int. Cl.: G06F 1/16, H04M 1/02

(54) **DISPLAY ASSEMBLY AND ELECTRONIC DEVICE COMPRISING SAME**

(30) Priority: 13.03.2024 KR 20240035264; 05.04.2024 KR 20240046393; 30.09.2024 KR 20240133124
(71) Applicant: Samsung Electronics Co., Ltd., Suwon-si, Gyeonggi-do 16677 (KR)
(72) Inventor: BAE, Jaehyun, Suwon-si, Gyeonggi-do 16677 (KR); MOON, Youngmin, Suwon-si, Gyeonggi-do 16677 (KR); CHOI, Hyunsuk, Suwon-si, Gyeonggi-do 16677 (KR)
(74) Representative: HGF
(86) International application number: PCT/KR2025/099250
(87) International publication number: WO 2025/193022

(57) **Abstract**

An electronic device according to an embodiment may comprise a first housing, a second housing rotatably coupled to the first housing, and a display assembly disposed on the first housing and the second housing and including a bending area that is bent while the electronic device is in a folded state. The display assembly may comprise a flexible display panel, and a sealing member including a first sealing portion disposed at a lateral side of the bending area of the flexible display panel and a second sealing portion extending from the first sealing portion along a lateral side of the flexible display panel. An elastic modulus of the second sealing portion may be higher than an elastic modulus of the first sealing portion.

## Description

### [Technical Field]

Various embodiments of the present disclosure relate to a display assembly and an electronic device including the same.

### [Background Art]

With a remarkable advancement in the fields of information and communication technology, semiconductor technology, and the like, commercialization and use of various electronic devices are increasing rapidly. In particular, the electronic devices nowadays are being developed to be portable and capable of communication.

The term electronic device may refer to a device, such as a home appliance, an electronic organizer, a portable multimedia player, a mobile communication terminal, a tablet PC, a video/audio device, a desktop/laptop computer, a vehicle navigation system, that performs a specific function according to an installed program. For example, such electronic devices may output stored information as sound or images. As the level of integration of electronic devices increases and ultra-high-speed, large-capacity wireless communication becomes commonplace, recently, various functions may be programmed in a single electronic device (e.g., a mobile communication terminal). For example, not only communication functions, but also entertainment functions such as games, multimedia functions such as music/video playback, and communication and security functions for mobile banking, and functions such as schedule management or an electronic wallet are being integrated into a single electronic device. Such electronic devices are being made smaller so that a user can conveniently carry them.

The above-described information may be provided as related art for the purpose of helping to understand the present disclosure. No claim or determination is made as to whether any of the above-described content can be applied as prior art related to the present disclosure.

### [Disclosure of Invention]

### [Solution to Problems]

An electronic device according to an embodiment may comprise a first housing, a second housing rotatably coupled with respect to the first housing, and a display assembly disposed on the first housing and the second housing and including a bending area that is bent while the electronic device is in a folded state. The display assembly may comprise a flexible display panel, and a sealing member including a first sealing portion disposed at a lateral side of the bending area of the flexible display panel and a second sealing portion extending from the first sealing portion along a lateral side of the flexible display panel. An elastic modulus of the second sealing portion may be higher than an elastic modulus of the first sealing portion.

An electronic device according to an embodiment may comprise a display panel at least a portion of which is bendable, a glass member disposed on an upper side of the display panel, a protective member disposed on an upper side of the glass member, a polymer member disposed on a lower side of the display panel, and a sealing member disposed to surround at least a part of an edge of at least one of the display panel, the glass member, the protective member, and the polymer member. The sealing member may comprise a first sealing portion and a second sealing portion having a higher elastic modulus than that of the first sealing portion.

The effects obtainable from the exemplary embodiments of the present disclosure are not limited to the effects mentioned above, and other effects not mentioned can be clearly derived and understood from the following description by a person having ordinary skill in the technical field to which the exemplary embodiments of the present disclosure pertain. That is, unintended effects resulting from implementing the exemplary embodiments of the present disclosure can also be derived from the exemplary embodiments of the present disclosure by a person having ordinary skill in the relevant technical field.

### [Brief Description of Drawings]

FIG. 1 is a block diagram of an electronic device in a network environment according to various embodiments.
FIG. 2A is a perspective view of a foldable electronic device in an unfolding state according to an embodiment.
FIG. 2B is a perspective view of a foldable electronic device in a folding state according to an embodiment.
FIG. 3 is an exploded view of a foldable electronic device according to an embodiment.
FIG. 4 is a perspective view illustrating a stacked structure of a display assembly according to an embodiment.
FIG. 5 is a plan view of a display assembly according to an embodiment.
FIG. 6 is a view illustrating a cross section of a display assembly taken along line A-A' of FIG. 5 and a peripheral configuration thereof.
FIG. 7 is a view illustrating a cross section of a display assembly taken along line B-B' of FIG. 5 and a peripheral configuration thereof.
FIG. 8 is a view illustrating a cross section of a display assembly taken along line C-C' of FIG. 5 and a peripheral configuration thereof.
FIGS. 9A and 9B are views for illustrating an inclined boundary between a first sealing portion and a second sealing portion according to an embodiment.
FIGS. 10A and 10B are views for illustrating a concavo-convex shaped boundary between a first sealing portion and a second sealing portion according to an embodiment.
FIGS. 11A and 11B are views for illustrating a concavo-convex and inclined boundary between a first sealing portion and a second sealing portion according to an embodiment.
FIG. 12A is a plan view of a display assembly according to an embodiment.
FIG. 12B is a side view illustrating a state in which the display assembly of FIG. 12A is bent.
FIGS. 13A, 13B, 13C, 13D, 13E, and 13F are views illustrating a cross section of a display assembly taken along line A-A' of FIG. 5 and a peripheral configuration thereof according to various embodiments.
FIG. 14 is a flowchart for illustrating a manufacturing process of a display assembly according to an embodiment.
FIG. 15 is a view illustrating a cross section of a display assembly taken along line A-A' of FIG. 5 and a peripheral configuration thereof according to an embodiment.
FIG. 16 is a view illustrating a cross section of a display assembly taken along line B-B' of FIG. 5 and a peripheral configuration thereof according to an embodiment.
FIG. 17 is a view illustrating a cross section of a display assembly taken along line C-C' of FIG. 5 and a peripheral configuration thereof according to an embodiment.
FIG. 18 is a plan view of a display assembly according to an embodiment.
FIG. 19 is a view illustrating a cross section of a display assembly corresponding to line A-A' of FIG. 5 and a peripheral configuration thereof according to an embodiment.
FIG. 20 is a view illustrating a cross section of a display assembly corresponding to line A-A' of FIG. 5 and a peripheral configuration thereof according to an embodiment.
FIG. 21 is a view illustrating a cross section of a display assembly corresponding to line A-A' of FIG. 5 and a peripheral configuration thereof according to an embodiment.
FIG. 22 is a plan view of a display assembly according to an embodiment.
FIG. 23 is a view illustrating a cross section of a display assembly taken along line K-K' of FIG. 22 and a peripheral configuration thereof according to an embodiment.
FIG. 24 is a cross-sectional view of a portion of a display assembly and a peripheral configuration thereof according to an embodiment.
In the following description, the accompanying drawings are referred to, and specific examples that can be practiced are illustrated by way of example in the drawings. In addition, other examples may be utilized and structural changes may be made without departing from the scope of various examples.

### [Mode for the Invention]

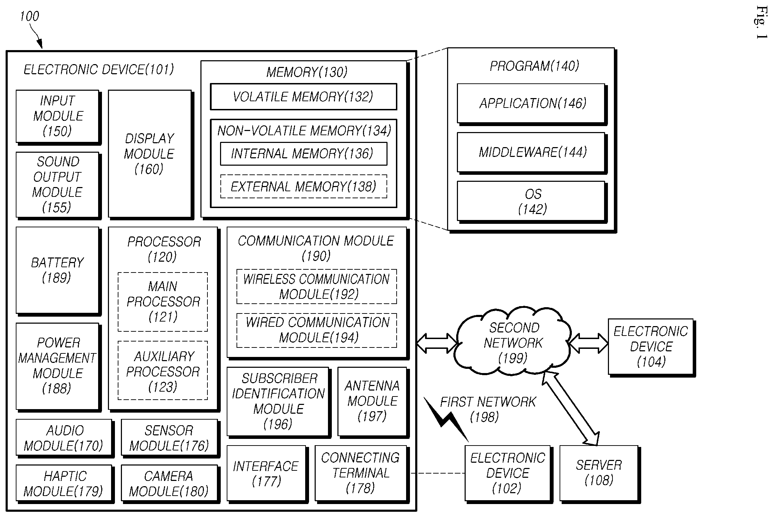

FIG. 1 through FIG. 24 disclosed below and the various embodiments used to describe the principles of the present disclosure in this patent document are for illustration only and should not be construed as limiting the scope of the present disclosure in any manner. Those skilled in the art will understand that the principles of the present disclosure can be implemented in any suitably arranged system or device.

Hereinafter, embodiments of the present disclosure will be described in detail with reference to the drawings so that a person having ordinary skill in the technical field to which the present disclosure pertains can easily carry them out. However, the present disclosure may be implemented in various different forms and is not limited to the embodiments described herein. In connection with the description of the drawings, the same or similar reference signs may be used for the same or similar components. In addition, in the drawings and the related description, descriptions of well-known functions and configurations may be omitted for clarity and conciseness.

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., a speaker or a headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. According to an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

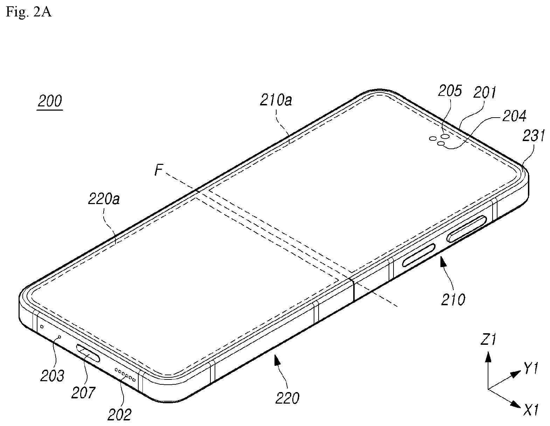

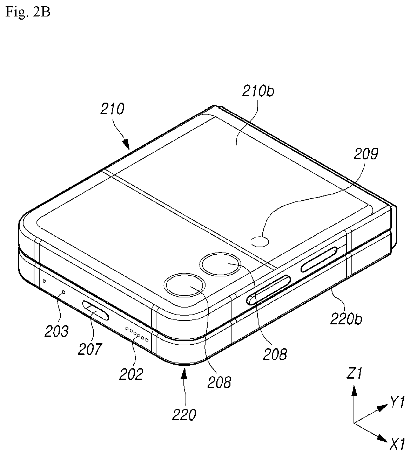

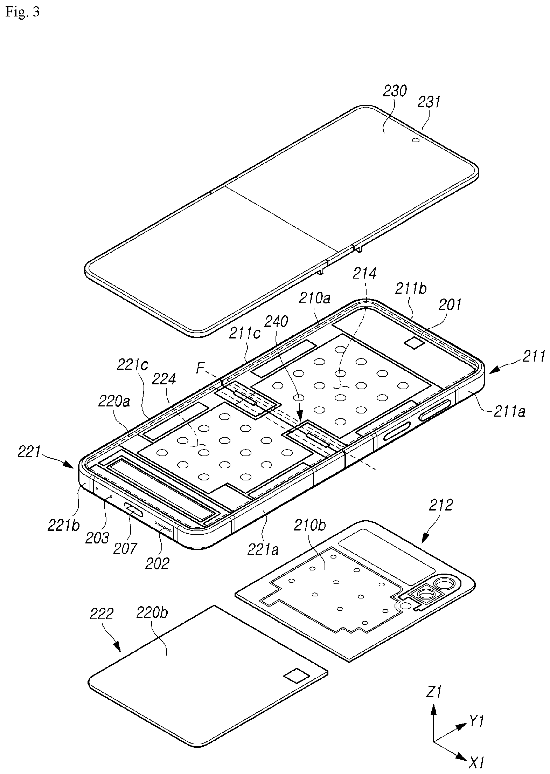

FIG. 2A is a perspective view of a foldable electronic device in an unfolding state according to an embodiment. FIG. 2B is a perspective view of a foldable electronic device in a folding state according to an embodiment. FIG. 3 is an exploded view of a foldable electronic device according to an embodiment.

The electronic device shown in FIG. 2A through FIG. 3 is for illustration, and the present disclosure is not limited by the drawings. The X-Y-Z coordinate system shown in FIG. 2A through FIG. 3 is for illustratively describing the arrangement of each configuration and does not limit the scope of rights.

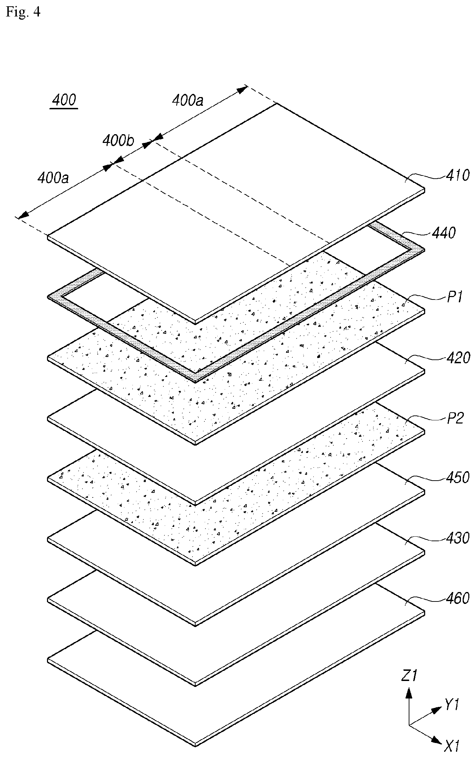

The embodiments of FIG. 2A through FIG. 3 may be selectively combined with at least one of the embodiments of FIG. 1 and the embodiments of FIG. 4 through FIG. 24.

An electronic device 200 (e.g., the electronic device 101 of FIG. 1) may comprise at least a pair of housings 210 and 220. The pair of housings 210 and 220 may be rotatably coupled, for example, to be folded facing each other with respect to a hinge (e.g., a hinge 240 of FIG. 3). As an example, the pair of housings 210 and 220 may comprise a first housing 210 and a second housing 220. The first housing 210 and the second housing 220 may be disposed on both sides about a folding axis F. One end region of the first housing 210 and one end region of the second housing 220 may be disposed side by side with the hinge 240 therebetween. The first housing 210 and the second housing 220 may have a shape symmetrical about a plane that includes the folding axis F and extends in the Z1-axis direction. Here, the folding axis F may be an axis in the direction of X1 formed by the hinge 240.

The first housing 210 may have substantially the same length (e.g., a length in the Y1-axis direction) as the second housing 220 but is not limited thereto. The first housing 210 may have substantially the same width (e.g., a width in the X1-axis direction) as the second housing 220 but is not limited thereto.

Hereinafter, the unfolding state (or flat state or the unfolded state) may refer to a state in which an angle formed by the first housing 210 and the second housing 220 is substantially 180 degrees. The folding state (or the folded state) may refer to a state in which an angle formed by the first housing 210 and the second housing 220 is substantially 0 degrees. For example, the folding state may refer to a state in which the first housing 210 and the second housing 220 are overlapped with each other. The intermediate state may refer to any state between the unfolding state and the folding state. In the electronic device 200, for example, the first housing 210 and the second housing 220 may rotate about the hinge 240 to form 0 degrees to 180 degrees. In the electronic device 200, for example, the first housing 210 and the second housing 220 may also rotate about the hinge 240 to form between 180 degrees and 360 degrees.

The first housing 210 may comprise a first surface 210a and a second surface 210b. The first surface 210a may be disposed, for example, to face a first direction (e.g., the +Z1-axis direction). The first surface 210a may be, for example, a surface on which at least a part of a display assembly 230 is disposed. The first surface 210a may refer, for example, to a virtual surface that overlaps at least a part of the display assembly 230. The second surface 210b may be disposed, for example, to face a second direction (e.g., the -Z1-axis direction). The second surface 210b may be, for example, a surface on which a first rear cover 212 is disposed. The second surface 210b may be parallel to the first surface 210a. The second surface 210b may refer, for example, to a plane defined by the first rear cover 212.

The second housing 220 may comprise a third surface 220a and a fourth surface 220b. The third surface 220a may be disposed, for example, to face a first direction (e.g., the +Z1-axis direction). The third surface 220a may be, for example, a surface on which at least a part of the display assembly 230 is disposed. The third surface 220a may refer, for example, to a virtual surface that overlaps at least a part of the display assembly 230. The fourth surface 220b may be disposed, for example, to face a second direction (e.g., the -Z1-axis direction). The fourth surface 220b may be, for example, a surface on which a second rear cover 222 is disposed. The fourth surface 220b may be parallel to the third surface 220a. The fourth surface 220b may refer, for example, to a plane defined by the second rear cover 222.

In a state in which the electronic device 200 is unfolded, the first surface 210a and the third surface 220a may be located within one arbitrary virtual plane (e.g., the X1-Y1 plane). For example, the first surface 210a and the third surface 220a may form the same plane in a state in which the electronic device 200 is unfolded. For example, the first surface 210a and the third surface 220a may be disposed to form 180 degrees with respect to the X1-Y1 plane in the unfolded state. In a state in which the electronic device 200 is unfolded, the second surface 210b and the fourth surface 220b may be located within another arbitrary virtual plane (e.g., the X1-Y1 plane). For example, the second surface 210b and the fourth surface 220b may form the same plane in a state in which the electronic device 200 is unfolded. For example, the second surface 210b and the fourth surface 220b may be disposed to form 180 degrees with respect to the X1-Y1 plane in the unfolded state.

In a state in which the electronic device 200 is folded, at least a part of the first surface 210a and at least a part of the third surface 220a may face each other. For example, in a state in which the electronic device 200 is folded, an angle formed by the first surface 210a and the third surface 220a may form 0 degrees with respect to the X1-Y1 plane. As the electronic device 200 is folded from the unfolded state, the angle formed by the first surface 210a and the third surface 220a with respect to the X1-Y1 plane may gradually decrease. For example, in the intermediate state, the angle formed by the first surface 210a and the third surface 220a with respect to the X1-Y1 plane may be determined between about 0 degrees and about 180 degrees. In a state in which the electronic device 200 is folded, the second surface 210b and the fourth surface 220b may be parallel to each other. For example, the second surface 210b and the fourth surface 220b may face opposite directions to each other in a state in which the electronic device 200 is folded.

The pair of housings 210 and 220, included in the electronic device 200, is not limited to the illustrated form and coupling and may be implemented by a combination and/or coupling of other shapes or components.

The first housing 210 may comprise a first side frame 211. The first side frame 211 may constitute a lateral side of the first housing 210. The first side frame 211 may constitute a part of the exterior of the first housing 210. The first side frame 211 may be disposed to protect, from the outside, components accommodated inside the electronic device 200.

The first side frame 211 may comprise a first side member 211a, a second side member 211b, and/or a third side member 211c. The first side member 211a may have a first length along a first longitudinal direction (e.g., the Y1-axis direction). The second side member 211b may extend in a direction substantially perpendicular (e.g., the X1-axis direction) from the first side member 211a. The second side member 211b may extend to have a second length that is equal to or different from the first length. The third side member 211c may extend in a direction substantially perpendicular (e.g., the Y1-axis direction) from the second side member 211b. The third side member 211c may extend in a direction substantially parallel to the first side member 211a. The third side member 211c may have a first length along a first longitudinal direction (e.g., the Y1-axis direction).

The first side member 211a, the second side member 211b, and the third side member 211c may be disposed to be visible from the outside. At least a part of the first side member 211a, the second side member 211b, and/or the third side member 211c may be formed as a curved surface. The first side frame 211 may be formed in an oblong (e.g., rectangular) shape by the first side member 211a, the second side member 211b, and the third side member 211c. The first side member 211a, the second side member 211b, and the third side member 211c may be integrally formed but are not limited thereto.

The second housing 220 may comprise a second side frame 221. The second side frame 221 may constitute a lateral side of the second housing 220. The second side frame 221 may constitute a part of the exterior of the second housing 220. The second side frame 221 may be disposed to protect, from the outside, components accommodated inside the electronic device 200.

The second side frame 221 may comprise a fourth side member 221a, a fifth side member 221b, and/or a sixth side member 221c. The fourth side member 221a may have a third length along a first longitudinal direction (e.g., the Y1-axis direction). The fifth side member 221b may extend in a direction substantially perpendicular (e.g., the X1-axis direction) from the fourth side member 221a. The fifth side member 221b may extend to have a fourth length that is equal to or different from the third length. The sixth side member 221c may extend in a direction substantially perpendicular (e.g., the Y1-axis direction) from the fifth side member 221b. The sixth side member 221c may extend in a direction substantially parallel to the fourth side member 221a. The sixth side member 221c may have a third length along a first longitudinal direction (e.g., the Y1-axis direction).

The fourth side member 221a, the fifth side member 221b, and the sixth side member 221c may be disposed to be visible from the outside. At least a part of the fourth side member 221a, the fifth side member 221b, and/or the sixth side member 221c may be formed as a curved surface. The second side frame 221 may be formed in an oblong (e.g., square or rectangular) shape by the fourth side member 221a, the fifth side member 221b, and the sixth side member 221c. The first length may be substantially equal to the third length. The second length may be substantially equal to the fourth length. The fourth side member 221a, the fifth side member 221b, and the sixth side member 221c may be integrally formed but are not limited thereto.

In a state in which the electronic device 200 is unfolded, the first side member 211a and the fourth side member 221a may be located substantially on a straight line. In a state in which the electronic device 200 is unfolded, the second side member 211b and the fifth side member 221b may be parallel to each other. In a state in which the electronic device 200 is unfolded, the third side member 211c and the sixth side member 221c may be located substantially on a straight line.

In the event that the electronic device 200 is in the folded state, the first side member 211a and the fourth side member 221a may be positioned to overlap each other. In the event that the electronic device 200 is in the folded state, the second side member 211b and the fifth side member 221b may be positioned to overlap each other. In the event that the electronic device 200 is in the folded state, the third side member 211c and the sixth side member 221c may be positioned to overlap each other.

The first housing 210 may include a first rear cover 212. The first rear cover 212 may form at least a portion of the second surface 210b of the first housing 210. The first rear cover 212 may be coupled to the first side frame 211. The first rear cover 212 may be, for example, integrally formed with the first side frame 211.

The second housing 220 may include a second rear cover 222. The second rear cover 222 may form at least a portion of the fourth surface 220b of the second housing 220. The second rear cover 222 may be coupled to the second side frame 221. The second rear cover 222 may be, for example, integrally formed with the second side frame 221.

The first rear cover 212 and/or the second rear cover 222 may be formed by, for example, at least one of coated or colored glass, ceramic, Glastic, polymer, or metal (e.g., aluminum, stainless steel (STS), or magnesium), or a combination thereof.

The electronic device 200 may include a display assembly 230 (e.g., a foldable display or a display). The display assembly 230 may be disposed across the first housing 210, the hinge 240, and the second housing 220. The display assembly 230 may be disposed to extend from a first surface 210a of the first housing 210, across the hinge 240, to at least a portion of the third surface 220a of the second housing 220. The display assembly 230 may be disposed such that the first surface 210a of the first housing 210 and the third surface 220a of the second housing 220 overlap each other. A portion of the display assembly 230 corresponding to the hinge 240 may be bent according to rotation of the hinge 240.

The display assembly 230 may be disposed to be visible from the outside in the unfolded state. The display assembly 230 may be disposed not to be visible from the outside in the folded state.

The electronic device 200 may include a protective cover 231. The protective cover 231 may be positioned such that an edge portion of the display assembly 230 is protected. The protective cover 231 may constitute a part of an exterior of the electronic device 200.

The electronic device 200 may include at least one of an input device (e.g., a microphone 203), a sound output device (e.g., a receiver for a call 201 or a speaker 202), a sensor module 204, a camera module (a first camera module 205 or a second camera module 208), a connector port 207, a key input device (not shown), or an indicator (not shown), which is disposed in a first internal space 214 of the first housing 210 or a second internal space 224 of the second housing 220. The electronic device 200 may be configured such that at least one of the above-described components is omitted or such that other components are additionally included.

The input device may include a plurality of microphones disposed to be capable of detecting a direction of sound. The sound output device may include, for example, the receiver for a call 201 and the speaker 202. The sound output devices 201 and 202 may be disposed to face the outside through at least one speaker hole formed in the first housing 210 or the second housing 220. The connector port 207 may be disposed to face the outside through a connector port hole formed in the first housing 210 or the second housing 220.

The sensor module 204 may generate an electrical signal or a data value corresponding to an internal operating state of the electronic device 200 or an external environmental state. The sensor module 204 may include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

The camera module may include the first camera module 205 disposed on a front surface (e.g., a surface in the +Z1-axis direction) of the electronic device 200 or the second camera module 208 disposed on a rear surface (e.g., a surface in the -Z1-axis direction). The first camera module 205 and/or the second camera module 208 may include one or a plurality of lenses, an image sensor, and/or an image signal processor. As an example, the first camera module 205 may be disposed below the display assembly 230 and may be configured to photograph a subject through a part of an activation area of the display assembly 230. A flash 209 may be positioned at the second camera module 208. The flash 209 may include, for example, a light emitting diode or a xenon lamp.

FIG. 4 is a perspective view illustrating a stacked structure of a display assembly according to an embodiment.

The display assembly 400 illustrated in FIG. 4 may be at least partially similar to the display assembly (e.g., the display assembly 230 of FIG. 2A) provided in the electronic device of FIG. 2A described above (e.g., the electronic device 200 of FIG. 2A).

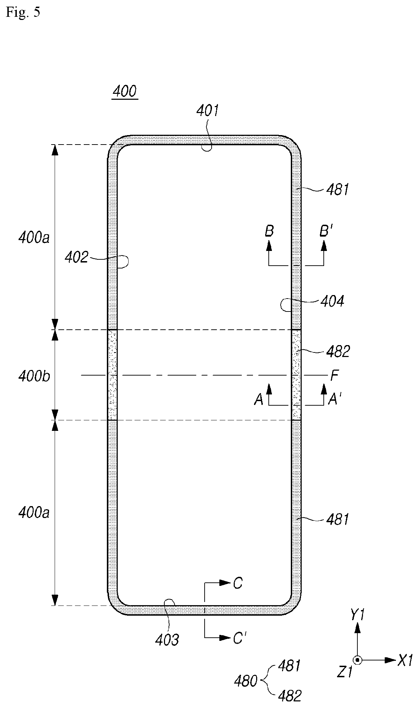

In the exploded perspective view of FIG. 4, a sealing member (e.g., the sealing member 480 of FIG. 5), which is one component of the display assembly 400, is omitted for convenience of description. The display assembly 400 may include the sealing member 480.

The embodiment of FIG. 4 may be selectively combined with at least one of the embodiment of FIGS. 1 to 3 and the embodiments of FIGS. 5 to 24.

According to an embodiment, electronic devices 200 having various form factors in which one housing (e.g., the first housing 210 of FIG. 2A) moves with respect to another housing (e.g., the second housing 220 of FIG. 2A) may include the display assembly 400 illustrated in FIG. 4.

According to an embodiment, the display assembly 400 may be disposed on the first housing 210 and the second housing 220. According to an embodiment, the display assembly 400 may be disposed to traverse at least the first housing 210 and the second housing 220. Therefore, at least a portion of the display assembly 400 may bend as the second housing 220 moves with respect to the first housing 210.

According to an embodiment, the display assembly 400 may include a bending area 400b and a non-bending area 400a. The bending area 400b and the non-bending area 400a may be configured in various shapes and numbers depending on the form factor of the electronic device 200 in which the display assembly 400 is to be mounted. The bending area 400b may refer to an area that is bent according to the movement of the housing in the electronic device 200. The non-bending area 400a is an area other than the bending area 400b and may refer to an area that is not bent or maintains a flat surface despite movement of the housing in the electronic device 200. The non-bending area 400a of the display assembly 400 is composed of a bendable, flexible, or deformable material, but may be an area that is not bent in a state of being mounted to the electronic device 200.

Referring to FIG. 4, the display assembly 400 may include a protective member 410 (e.g., a protective film), a glass member 420, and a display panel 430. According to an embodiment, the display assembly 400 may be configured such that the protective member 410, the glass member 420, and the display panel 430 are sequentially stacked from an upper side. Each component may be attached by adhesive members P1 and P2 but is not limited thereto.

The adhesive members P1 and P2 may include at least one of an optically clear adhesive (OCA) film, an OCR resin, a pressure sensitive adhesive (PSA) film, a thermally reactive adhesive, a general adhesive, or a double-sided tape. The adhesive members P1 and P2 include a photo-curable adhesive material or a thermosetting adhesive material, and the material thereof is not particularly limited. The adhesive members P1 and P2 may include, for example, at least one of a first adhesive member P1 disposed to adhere the protective member 410 and the glass member 420, and a second adhesive member P2 disposed to adhere the glass member 420 and the display panel 430.

The first adhesive member P1 may be disposed to be attached to at least a portion of an upper surface of the glass member 420. The second adhesive member P2 may be disposed to be attached to at least a portion of a lower surface of the glass member 420. However, it is not limited thereto, and as will be described later, the first adhesive member P1 may be attached to a portion of the upper surface of the glass member 420, and the second adhesive member P2 may be attached to the remaining portion of the upper surface of the glass member 420. Adhesive members having different physical properties may be disposed around the glass member 420 in various manners and structures.

The configuration illustrated in FIG. 4 is exemplary for convenience of description, and the display assembly 400 may further include additional configurations other than these. For example, although not illustrated, various kinds of layers, such as a touch sensing layer, may be disposed on an upper side of the display panel 430. The touch sensing layer may be configured to obtain coordinate information of an external input. The touch sensing layer may be, for example, a capacitive touch detecting member. However, it is not limited thereto and may be replaced with a touch detecting layer of another type that includes two types of touch electrodes, such as an electromagnetic induction type.

According to an embodiment, the display panel 430 may be disposed below the glass member 420. The display panel 430 may be disposed, for example, below the glass member 420 with a polarizing layer 450 interposed therebetween. The display panel 430 may be a display panel such as an organic light emitting display panel, an electrophoretic display panel, an electrowetting display panel, or a quantum dot display panel, but the type thereof is not limited. A light emitting layer of the organic light emitting display panel may include an organic light emitting material. A light emitting layer of the quantum dot display panel may include quantum dots and quantum rods. The display panel 430 may be formed such that at least a portion thereof is bendable. For example, the display panel 430 may be formed such that at least a portion thereof is deformable.

According to an embodiment, the display assembly 400 may include a polarizing layer 450. The polarizing layer 450 may be disposed on the display panel 430. For example, the polarizing layer 450 may be disposed between the glass member 420 and the display panel 430. The polarizing layer 450 may reduce an external light reflectance of the display assembly 400 by absorbing or destructively interfering with light incident from the outside. For example, the polarizing layer 450 may be integrally formed with the display panel 430 by a continuous process. For example, the polarizing layer 450 may be one component of the display panel 430. In case the polarizing layer 450 and the display panel 430 are integrally formed, an adhesive member therebetween may be omitted. In case the polarizing layer 450 is separately manufactured and attached to the display panel 430, it may be attached by an adhesive member.

According to an embodiment, the glass member 420 may be disposed on an upper side of the display panel 430. The glass member 420 may be attached to the display panel 430 to be in direct contact therewith by an attachment member. However, it is not limited thereto, and various kinds of layers, such as the polarizing layer 450 or a touch sensing layer (not shown), may be disposed between the glass member 420 and the display panel 430.

According to an embodiment, the glass member 420 may have various shapes in order to improve rigidity of a corner portion in the bending area 400b. The glass member 420 may have various structures at a corner portion in order to prevent or reduce breakage in the bending area 400b, and a detailed description thereof will be described later.

According to an embodiment, the protective member 410 (e.g., a protective film) may be disposed on an uppermost layer of the display assembly 400. The protective member 410 may be disposed on an upper side of the glass member 420 in order to protect the glass member 420 from an external impact. The protective member 410 protects the glass member 420 from an external impact and may help prevent scattering of glass fragments when the glass member 420 is broken.

The protective member 410 and the glass member 420 may be attached to each other by a first adhesive member P1. As the protective member 410 and the glass member 420 are attached to each other, the first adhesive member P1 may be disposed between the protective member 410 and the glass member 420.

According to an embodiment, the protective member 410 may be attached to the glass member 420 to be detachable. In case damage occurs to the protective member 410 due to an external impact, a new protective member 410 may be attached on the glass member 420. Therefore, the adhesive force of the first adhesive member P1 may be weaker than the adhesive force of a second adhesive member P2.

According to an embodiment, the protective member 410 may comprise polyethylene terephthalate (PET) or polyimide (PI), but is not limited thereto, and may include a material used for the glass member 420 or a polymer member 460 to be described later. For example, the thickness of the protective member 410 may be substantially the same as or relatively thinner than the thickness of the glass member 420. As an example, the protective member 410 may be omitted from the configuration of the display assembly 400. In the event that the protective member 410 is omitted, the first adhesive member P1 may also be omitted together.

According to an embodiment, the display assembly 400 may comprise the polymer member 460 disposed below the display panel 430. The polymer member 460 may, for example, have a dark color applied thereto to assist in background presentation in case the display is off. The polymer member 460 may, for example, act as a buffering member for absorbing an impact from the outside of the electronic device to prevent or reduce breakage of the display assembly 400.

The polymer member 460 may comprise a plastic film as a base layer. The polymer member may comprise a plastic film comprising any one selected from the group consisting of polyethersulphone (PES), polyacrylate (PAR), polyetherimide (PEI), polyethylene naphthalate (PEN), polyethylene terephthalate (PET), polyphenylene sulphide (PPS), polyarylate, polyimide (PI), polycarbonate (PC), or a combination thereof.

Although not shown, a metal sheet layer may be disposed below the display panel 430. For example, the metal sheet layer may be disposed between the display panel 430 and the polymer member 460. However, the arrangement of the metal sheet layer is not limited thereto, and the metal sheet layer may also be disposed below the polymer member 460.

The metal sheet layer may assist in reinforcing the rigidity of the electronic device. The metal sheet layer may, for example, be used to shield ambient noise and to disperse heat emitted from surrounding heat-emitting components. The metal sheet layer may comprise at least one of STS, Cu, Al, or other alloy materials.

According to an embodiment, the display assembly 400 may further comprise a printed layer 440. The printed layer 440 may be disposed in a partial region of the display assembly 400. For example, the printed layer 440 may be disposed near an edge of the protective member 410. For example, the printed layer 440 may be disposed along an edge of the protective member 410. As an example, the printed layer 440 may extend along the edge of the protective member 410 to have an approximately quadrangular shape. For example, the printed layer 440 may be disposed along a border of the protective member 410. The printed layer 440 may be disposed on an upper side or a lower side of the protective member 410. However, it is not limited thereto, and the printed layer 440 may also be disposed on an upper side or a lower side of the glass member 420.

According to an embodiment, the printed layer 440 may be a border (e.g., a black matrix (BM) printed layer) of a display region visible from the outside in a state in which the display assembly 400 is disposed in an electronic device (e.g., the electronic device 200 of FIG. 2A). The printed layer 440 may be formed along a border portion of the protective member 410 but is not limited thereto. As an example, the printed layer 440 may, for example, form a bezel pattern. The printed layer 440 may, for example, be composed of a light-blocking material through which light is not transmitted.

The printed layer 440 may, for example, have a width of 2.5 mm or less, but is not limited thereto.

FIG. 5 is a plan view of a display assembly according to an embodiment.

The display assembly 400 illustrated in FIG. 5 may be substantially the same as the display assembly 400 illustrated in FIG. 4. The display assembly 400 illustrated in FIG. 5 may have a stacked structure as illustrated in FIG. 4. Overlapping configurations are omitted hereinafter.

The display assembly 400 illustrated in FIG. 5 may be at least partially similar to the display assembly (e.g., the display assembly 230 of FIG. 2A) provided in the aforementioned electronic device of FIG. 2A (e.g., the electronic device 200 of FIG. 2A).

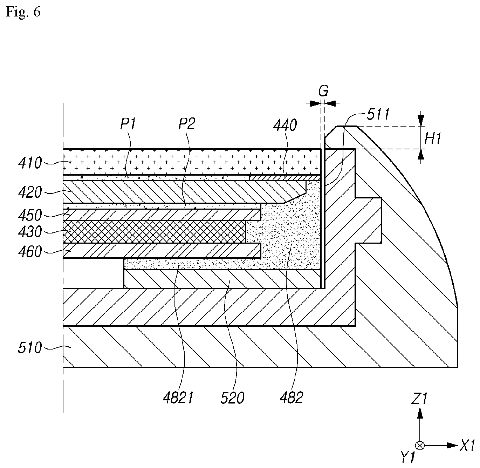

The embodiment of FIG. 5 may be selectively combined with at least one of the embodiments of FIGS. 1 to 4 and the embodiments of FIGS. 6 to 24.

According to an embodiment, an electronic device (e.g., the electronic device 101 of FIG. 1 or the electronic device 200 of FIGS. 2A, 2B, and 3) may comprise the display assembly 400.

Referring to FIG. 5, the display assembly 400 may comprise a sealing member 480. The sealing member 480 may form an edge or a lateral side of the display assembly 400. For example, the sealing member 480 may be disposed to surround an edge or a lateral side of the display assembly 400. For example, the sealing member 480 may be referred to as a molding member or a protective cover. For example, the sealing member 480 may be a configuration that is substantially the same as or corresponds to the protective cover of FIG. 3 (e.g., the protective cover 231 of FIG. 3). The sealing member 480 may protect a configuration inside the display assembly 400, such as the display panel 430, from an external impact.

According to an embodiment, the sealing member 480 may be disposed outside the display panel (e.g., the display panel 430 of FIG. 4). According to an embodiment, the sealing member 480 may be disposed outside the polymer member (e.g., the polymer member 460 of FIG. 4). According to an embodiment, the sealing member 480 may be disposed outside the glass member (e.g., the glass member 420 of FIG. 4). According to an embodiment, the sealing member 480 may be disposed outside or below the protective member (e.g., the protective member 410 of FIG. 4).

According to an embodiment, the display assembly 400 may comprise a first edge 401, a second edge 402, a third edge 403, and a fourth edge 404. A planar shape of the display assembly 400 may be defined by the first edge 401, the second edge 402, the third edge 403, and the fourth edge 404. The second edge 402 may extend in a direction perpendicular to the first edge 401. The second edge 402 may be formed to be longer than the first edge 401. The third edge 403 may extend in a direction perpendicular to the second edge 402. The first edge 401 and the third edge 403 may be parallel to each other. The lengths of the first edge 401 and the third edge 403 may be substantially the same. The length of the third edge 403 may be shorter than the length of the second edge 402. The fourth edge 404 may extend in a direction perpendicular to the third edge 403. The fourth edge 404 may connect the first edge 401 and the third edge 403. The fourth edge 404 may be parallel to the second edge 402. The lengths of the fourth edge 404 and the second edge 402 may be substantially the same.

According to an embodiment, the sealing member 480 may be disposed on at least one edge among the first edge 401, the second edge 402, the third edge 403, and the fourth edge 404. For example, the sealing member 480 may be disposed to surround the first edge 401, the second edge 402, the third edge 403, and the fourth edge 404.

According to an embodiment, the display assembly 400 may comprise a bending area 400b and a non-bending area 400a. The bending area 400b may be a region comprising a folding axis F. The sealing member 480 may be disposed on edges of the bending area 400b and the non-bending area 400a. Here, the non-bending area 400a may refer to a region that is deformable but is not deformed despite an operation of the electronic device 200 while the display assembly 400 is mounted on an electronic device (e.g., the electronic device 200 of FIG. 2A).

According to an embodiment, the sealing member 480 may comprise a first sealing portion 482 and a second sealing portion 481. The first sealing portion 482 and the second sealing portion 481 may be integrally formed. The first sealing portion 482 and the second sealing portion 481 may be coupled by being joined or attached to each other. The first sealing portion 482 and the second sealing portion 481 may be coupled to form a substantially quadrangular or framed shape.

The illustrated coupling form of the first sealing portion 482 and the second sealing portion 481 is exemplary for convenience of description, and the shapes of the first sealing portion 482 and the second sealing portion 481 are not limited to what is illustrated. Various combinations of the first sealing portion 482 and the second sealing portion 481 may be configured depending on the shape or form factor of the electronic device.

According to an embodiment, the first sealing portion 482 may be disposed in the bending area 400b of the display assembly 400. For example, the first sealing portion 482 may be disposed to be in contact with an edge or a lateral side of the bending area 400b of the display assembly 400. For example, the first sealing portion 482 may be disposed to surround an edge or a lateral side of the bending area 400b of the display assembly 400. For example, the first sealing portion 482 may be disposed to surround an edge or a lateral side of a portion of the display panel (e.g., the display panel 430 of FIG. 6) corresponding to the bending area 400b. The first sealing portion 482 may be disposed to protect an edge of the bending area 400b in the display assembly 400. However, it is not limited thereto, and the first sealing portion 482 may also be disposed on a part of an edge or a lateral side of the bending area 400b of the display assembly 400. The first sealing portion 482 may be disposed on a part of the second edge 402 and a part of the fourth edge 404.

According to an embodiment, the second sealing portion 481 may extend from the first sealing portion 482. The second sealing portion 481 may be disposed in the non-bending area 400a of the display assembly 400. For example, the second sealing portion 481 may be disposed to be in contact with an edge or a lateral side of the non-bending area 400a of the display assembly 400. For example, the second sealing portion 481 may be disposed to surround an edge or a lateral side of the non-bending area 400a of the display assembly 400. For example, the second sealing portion 481 may be disposed to surround an edge or a lateral side of a portion of the display panel (e.g., the display panel 430 of FIG. 6) corresponding to the bending area 400b. For example, the second sealing portion 481 may be disposed to surround an edge or a lateral side of a region other than the bending area 400b. The second sealing portion 481 may be disposed to protect an edge or the lateral side of the non-bending area 400a in the display assembly 400.

According to an embodiment, the first sealing portion 482 and the second sealing portion 481 may have different physical properties from each other. The first sealing portion 482 may be bent together when the display assembly 400 is bent. The second sealing portion 481 may not be bent despite the bending of the display assembly 400. Therefore, the first sealing portion 482 may have physical properties that are that are more easily bent than the second sealing portion 481.

According to an embodiment, the first sealing portion 482 may have a lower elastic modulus than that of the second sealing portion 481. The first sealing portion 482 may have a lower elastic resistance than that of the second sealing portion 481. The first sealing portion 482 may have a lower modulus value than that of the second sealing portion 481. The first sealing portion 482 may have a lower hardness than that of the second sealing portion 481. The first sealing portion 482 may have a lower torsional strength than that of the second sealing portion 481. As such, by differentiating the physical properties of the first sealing portion 482 and the second sealing portion 481, the first sealing portion 482 disposed around the bending area 400b is bent together with the bending of the bending area 400b, so that the possibility of breakage of the first sealing portion 482 may be reduced. The second sealing portion 481 may have a higher elastic modulus or modulus value than that of the first sealing portion 482, thereby more firmly protecting the edge portion of the non-bending area 400a from an external impact.

According to an embodiment, the second sealing portion 481 may have a modulus value of 500 MPa or more. For example, the second sealing portion 481 may have a modulus value of 500 MPa to 700 MPa.

According to an embodiment, the first sealing portion 482 may have a smaller modulus value than that of the second sealing portion 481 by 400 MPa or more. For example, the first sealing portion 482 may have a modulus value of 300 MPa or less.

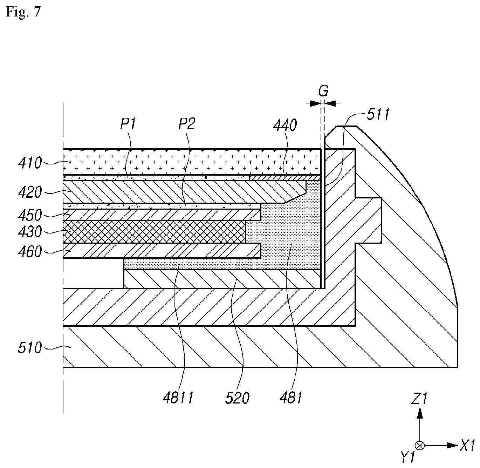

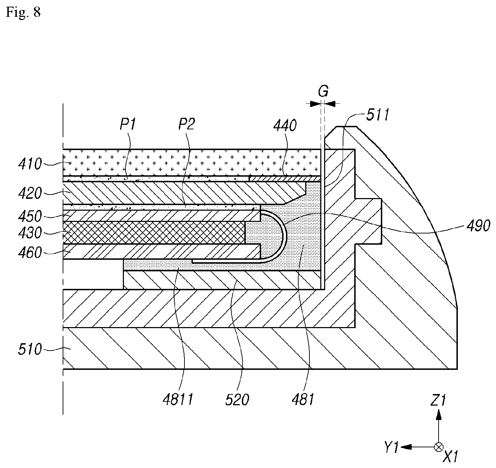

FIG. 6 is a view illustrating a cross section of the display assembly taken along the line A-A' of FIG. 5 and a peripheral configuration thereof. FIG. 7 is a view illustrating a cross section of the display assembly taken along the line B-B' of FIG. 5 and a peripheral configuration thereof. FIG. 8 is a view illustrating a cross section of the display assembly taken along the line C-C' of FIG. 5 and a peripheral configuration thereof.

Among the configurations illustrated in FIGS. 6 to 8, the same reference numerals are used for configurations that are substantially the same as the configurations described in FIGS. 4 and 5.

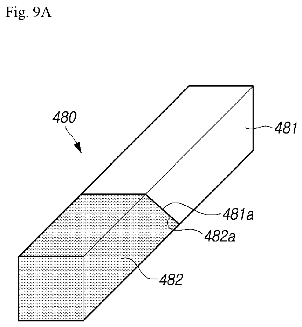

The embodiment of FIGS. 6 to 8 may be optionally combined with at least one of the embodiments of FIGS. 1 to 5 and the embodiments of FIGS. 9A to 24.

Referring to FIGS. 6 to 8, the display assembly 400 may be disposed in a housing 510. Here, the housing 510 may correspond to the first housing of FIG. 2A (e.g., the first housing 210 of FIG. 2A) or the second housing of FIG. 2A (e.g., the second housing 220 of FIG. 2A).

Referring to FIGS. 6 to 8, an electronic device (e.g., the electronic device 200 of FIG. 2A) may include a waterproof member 520. As illustrated, the electronic device 200 may include the waterproof member 520 disposed between the display assembly 400 and the housing 510. The waterproof member 520 may be disposed to be spaced apart from the display assembly 400. A space may be formed between the display assembly 400 and the waterproof member 520. The waterproof member 520 may be disposed, for example, in a state of being attached to the housing 510. The waterproof member 520 may be, for example, an adhesive tape having adhesive characteristics on at least one surface but is not limited thereto.

Referring to FIGS. 6 to 8, the sealing members 481 and 482 may be disposed on a lower side (e.g., in a -Z1-axis direction) of the protective member 410. The protective member 410 may be disposed to protrude relatively further outward (e.g., in a +X1-axis direction) than the glass member 420. The protective member 410 may have a relatively larger area than that of the glass member 420.

According to an embodiment, the sealing members 481 and 482 may be disposed to surround at least a portion of an edge or a lateral side of at least one of a polarizing layer 450, the display panel 430, the glass member 420, the protective member 410, and a polymer member 460. The sealing member 480 may be disposed to be in contact with an edge or a lateral side of the polarizing layer 450, the display panel 430, the glass member 420, and the polymer member 460, as illustrated. However, it is not limited thereto, and the sealing member 480 may, unlike as illustrated, be disposed not to be in contact with the edge or the lateral side of the glass member 420.

Referring to FIGS. 6 to 8, a printed layer 440 may be disposed to be in contact with the protective member 410 and the sealing members 481 and 482. The printed layer 440 may be disposed on an upper side (e.g., in a +Z1-axis direction) of the sealing members 481 and 482. The printed layer 440 may be disposed between the protective member 410 and the sealing member 480. The printed layer 440 is disposed on the upper side of the sealing members 481 and 482, thereby blocking the sealing members 481 and 482 from being seen from the outside, so that aesthetics may be improved.

According to an embodiment, the sealing members 481 and 482 may be disposed on a lower side (e.g., in a -Z1-axis direction) of the protective member 410. The sealing members 481 and 482 may be disposed on a lower side of the edge of the protective member 410. Since the sealing members 481 and 482 are disposed to surround an edge or a lateral side of the remaining configuration of the display assembly 400 excluding the protective member 410, the protective member 410 may be more easily separated from the display assembly 400. For example, in case the sealing members 481 and 482 are disposed to surround the edge or the lateral side of the protective member 410 to fix the protective member 410, there may be difficulty in separating the protective member 410 from the display assembly 400 upon replacement due to breakage of the protective member 410 or the like. In the present disclosure, by disposing the sealing members 481 and 482 on the lower side of the protective member 410, the protective member 410 may be replaced more easily.

Referring to FIGS. 6 to 8, a gap G may be formed between the lateral side of the display assembly 400 and the housing 510. A gap G may be formed between the sealing members 481 and 482 and an inner side surface 511 of the housing 510. For example, the sealing members 481 and 482 may be disposed to be spaced apart from the inner side surface 511 of the housing 510 by a predetermined interval. For example, the sealing members 481 and 482 may be disposed to be spaced apart from an inner side surface of the first housing (e.g., the first housing 210 of FIG. 2A) or the second housing (e.g., the second housing 220 of FIG. 2A) by a predetermined interval.

Referring to FIGS. 6 to 8, the sealing members 481 and 482 may be configured to seal the space between the display assembly 400 and the waterproof member 520. A lower surface of the sealing members 481 and 482 may be attached to the waterproof member 520.

According to an embodiment, the first sealing portion 482 may include a first part 4821 that is attached to the waterproof member 520 at a lower portion thereof and seals the space formed between the display assembly 400 and the waterproof member 520.

According to an embodiment, the second sealing portion 481 may include a second part 4811 that is attached to the waterproof member 520 at a lower portion thereof and seals the space formed between the display assembly 400 and the waterproof member 520.

According to an embodiment, the waterproof member 520 may be disposed to overlap a lower surface of the first sealing portion 482. The width of the waterproof member 520 may be equal to or smaller than the width of the lower surface of the first sealing portion 482. The waterproof member 520 may be formed not to protrude outward relative to the first sealing portion 482. Here, the width of the waterproof member 520 may be a value measured with reference to the X1-axis direction in FIG. 6. However, it is not limited thereto, and the waterproof member 520 may have a width larger than that of the first sealing portion 482.

According to an embodiment, the waterproof member 520 may be disposed to overlap a lower surface of the second sealing portion 481. The width of the waterproof member 520 may be smaller than or equal to the width of the lower surface of the second sealing portion 482. The waterproof member 520 may be formed not to protrude outward relative to the second sealing portion 481. Here, the width of the waterproof member 520 may be a value measured with reference to the X1-axis direction in FIG. 7. However, it is not limited thereto, and the waterproof member 520 may have a width larger than that of the second sealing portion 481.

The sealing member 480 may also perform a waterproof function by sealing the space between the display assembly 400 and the waterproof member 520. In the present disclosure, by disposing the sealing members 481 and 482, water or foreign substances may be prevented from being introduced into the inside of the electronic device 200.

Referring to FIG. 8, the display assembly 400 may include a flexible circuit board 490. A portion of the flexible circuit board 490 may extend from the display panel 430. The flexible circuit board 490 may be disposed in such a manner that it extends from the display panel 430 and is folded into at least a partial region of a rear surface of the display assembly 400. A portion of the flexible circuit board 490 extending from the display panel 430 may be formed to be bent. The flexible circuit board 490 may be electrically connected to the display panel 430. A portion of the flexible circuit board 490 may extend from the outer side of the edge of the display panel 430. The flexible circuit board 490 may include a display driver IC (DDI) or a touch display driver IC (TDDI). The flexible circuit board 490 may have the DDI or the TDDI disposed on one surface thereof in a chip on film (COF) or chip on panel or chip on plastic (COP) structure.

According to an embodiment, various elements related to driving of the display panel 430 may be disposed on the flexible circuit board 490. For example, a flash memory for a display, a diode for ESD prevention, a pressure sensor, and/or a passive element may be disposed on the flexible circuit board 490.

According to an embodiment, the sealing member 480 of the display assembly 400 may be disposed to surround the flexible circuit board 490. The second sealing portion 481 may be disposed to surround the flexible circuit board 490. The second sealing portion 481 may be disposed to protect the flexible circuit board 490 from external impact. The sealing member 480 may protect the flexible circuit board 490, which is a part vulnerable to damage, in case the display assembly 400 receives an external impact.

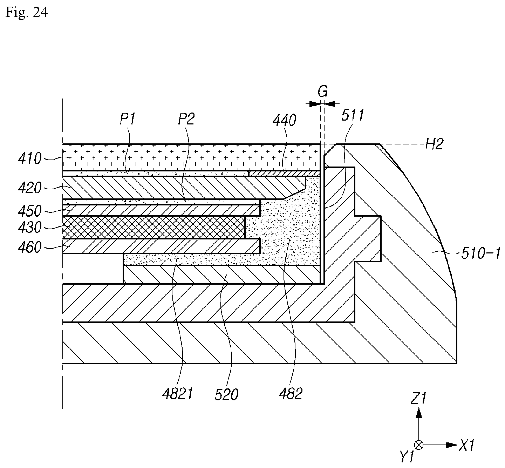

According to an embodiment, a side portion of the housing 510 may be formed to protrude upward beyond the display assembly 400. The side portion of the housing 510 may be formed to protrude upward beyond an upper surface of the display assembly 400. For example, the side portion of the housing 510 may be formed to protrude further upward beyond an upper surface of the protective member 410. The side portion of the housing 510 may protrude upward by H1 in case compared with the upper surface of the display assembly 400. Here, H1 may refer to a vertical distance between the upper surface of the display assembly 400 and an upper end of the side portion of the housing 510. According to some embodiments, H1 may, unlike as illustrated, have a value that is substantially 0 or close to 0 (see FIG. 24).

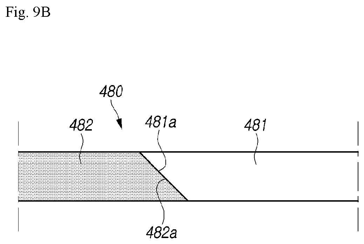

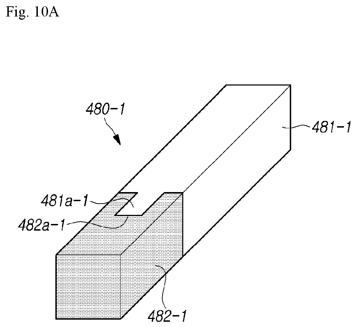

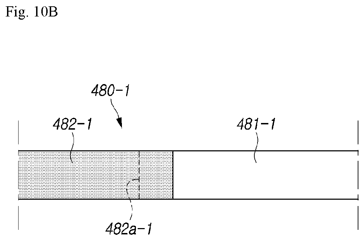

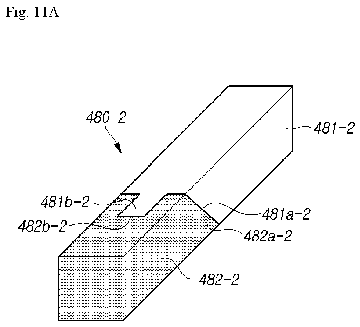

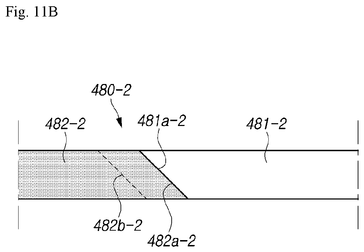

FIGS. 9A and 9B are views for describing an inclined boundary of a first sealing portion and a second sealing portion according to an embodiment. FIGS. 10A and 10B are views for describing a concavo-convex shape boundary of a first sealing portion and a second sealing portion according to an embodiment. FIGS. 11A and 11B are views for describing a concavo-convex and inclined boundary of a first sealing portion and a second sealing portion according to an embodiment.

The views illustrated in FIGS. 9A, 9B, 10A, 10B, 11A, and 11B schematically illustrate a portion of the sealing member for convenience of description, and the scope of the present disclosure is not limited to what is illustrated.

FIGS. 9A, 10A, and 11A are perspective views of a portion of the sealing members 480, 480-1, and 480-2 according to various embodiments. FIGS. 9B, 10B, and 11B are side views of a portion of the sealing members 480, 480-1, and 480-2 according to various embodiments.

The sealing members 480, 480-1, and 480-2 illustrated in FIGS. 9A, 9B, 10A, 10B, 11A, and 11B may be included in the display assembly 400 of FIG. 4.

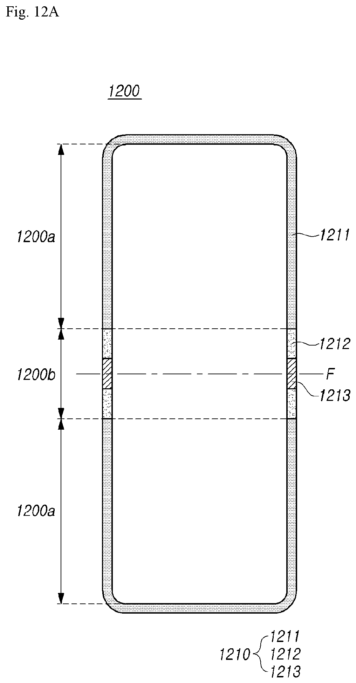

The embodiments of FIGS. 9A, 9B, 10A, 10B, 11A, and 11B may be optionally combined with at least one of the embodiment of FIGS. 1 to 8 and the embodiments of FIGS. 12A to 24.

Referring to FIGS. 9A, 9B, 10A, 10B, 11A, and 11B, the sealing members 480, 480-1, and 480-2 may form boundary surfaces of various shapes between the first sealing portions 482, 482-1, and 482-2 and the second sealing portions 481, 481-1, and 481-2. By forming the boundary surfaces of various illustrated shapes, a contact area between the first sealing portions 482, 482-1, and 482-2 and the second sealing portions 481, 481-1, and 481-2 may be increased. By increasing the contact area between the first sealing portions 482, 482-1, and 482-2 and the second sealing portions 481, 481-1, and 481-2, an adhesive force or a coupling force of the first sealing portions 482, 482-1, and 482-2 and the second sealing portions 481, 481-1, and 481-2 may be strengthened.

FIGS. 9A and 9B, FIGS. 10A and 10B, and FIGS. 11A and 11B are examples, each describe one surface where the first sealing portions 482, 482-1, and 482-2 and the second sealing portions 481, 481-1, and 481-2 are in contact, and if the surfaces are surfaces where the first sealing portions 482, 482-1, and 482-2 and the second sealing portions 481, 481-1, and 481-2 are in contact, any one of the shapes illustrated in FIGS. 9A to 11B may be applied.

Referring to FIGS. 9A and 9B, the boundary surface where the first sealing portion 482 and the second sealing portion 481 are in contact may form an inclined surface. The boundary surface may be an inclined surface inclined at a predetermined angle with respect to a plane of a display assembly (e.g., the display assembly 400 of FIG. 4) or a display panel (e.g., the display panel 430 of FIG. 4).

According to an embodiment, the first sealing portion 482 may comprise a first inclined surface 482a. The second sealing portion 481 may comprise a second inclined surface 481a corresponding to the first inclined surface 482a. The first inclined surface 482a and the second inclined surface 481a may be in contact with each other. An inclination angle of the first inclined surface 482a and an inclination angle of the second inclined surface 481a may be substantially the same. By coupling the first sealing portion 482 and the second sealing portion 481 using the inclined surfaces, a contact area where the first sealing portion 482 and the second sealing portion 481 are in contact may be increased.

Referring to FIGS. 10A and 10B, the second sealing portion 481-1 may comprise a protrusion 481a-1 protruding in a direction toward the first sealing portion 482-1. The first sealing portion 482-1 may comprise a recess 482a-1 formed to receive the protrusion 481a-1. The recess 482a-1 of the first sealing portion 482-1 may correspond to the shape of the protrusion 481a-1 of the second sealing portion 481-1. As the protrusion 481a-1 of the second sealing portion 481-1 is received and coupled to the recess 482a-1 of the first sealing portion 482-1, a contact area, where the first sealing portion 482-1 and the second sealing portion 481-1 are in contact, may be increased. The protrusion 481a-1 of the second sealing portion 481-1 may have a concavo-convex shape but is not limited thereto. For example, the protrusion 481a-1 of the second sealing portion 481-1 may have a wavy shape.

According to another embodiment, illustrated differently, a protrusion protruding in a direction toward the second sealing portion 481-1 from the first sealing portion 482-1 may be formed, and a recess for receiving the protrusion may be formed in the second sealing portion 481-1.

Referring to FIGS. 11A and 11B, the first sealing portion 482-2 and the second sealing portion 481-2 may have a shape in which the embodiments of FIGS. 9A and 10A are combined. According to an embodiment, the first sealing portion 482-2 may comprise a first inclined surface 482a-2, and the second sealing portion 481-2 may comprise a second inclined surface 481a-2 corresponding to the first inclined surface 482a-2. According to an embodiment, the second sealing portion 481-2 may comprise a protrusion 481b-2, and the first sealing portion 482-2 may comprise a recess 482b-2 for receiving the protrusion 481b-2. Here, a side cross section of the protrusion 481b-2 may be formed to be inclined like the first inclined surface 482a-2 or the second inclined surface 481-2.

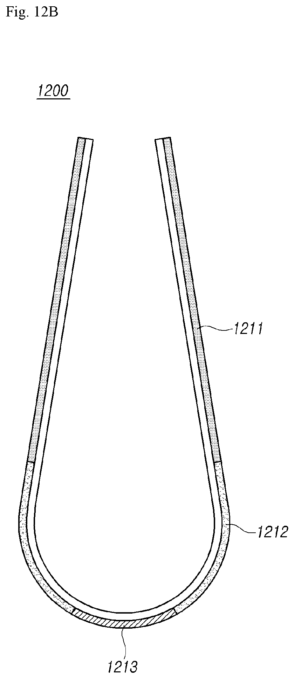

FIG. 12A is a plan view of a display assembly according to an embodiment. FIG. 12B is a side view illustrating a state in which the display assembly of FIG. 12A is bent.

The display assembly 1200 illustrated in FIGS. 12A and 12B may be included in the electronic device 200 of FIG. 2A.

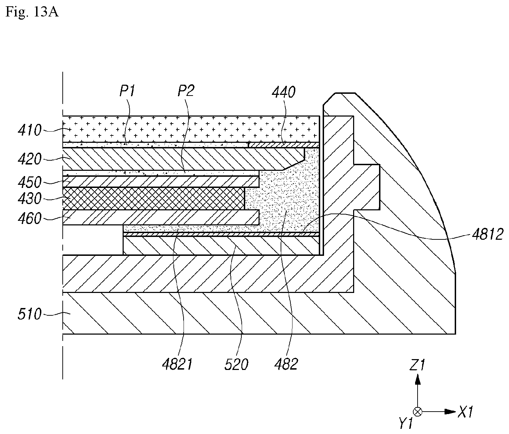

The embodiments of FIGS. 12A and 12B may be selectively combined with at least one of the embodiments of FIGS. 1 to 11B and the embodiments of FIGS. 13A to 24.

According to an embodiment, the display assembly 1200 may comprise a bending area 1200b and a non-bending area 1200a. The bending area 1200b and the non-bending area 1200a may be configured in various shapes and numbers according to a form factor of the electronic device 200 in which the display assembly 1200 is to be mounted. The bending area 1200b may refer to an area that is bent according to movement of housing in the electronic device 200. The non-bending area 1200a is an area other than the bending area 1200b and may refer to an area that is not bent or maintains a plane despite movement of the housing in the electronic device 200. The non-bending area 1200a of the display assembly 1200 is composed of a material capable of being bent or deformed but may be an area that is not bent in a state of being mounted to the electronic device 200.

According to an embodiment, the display assembly 1200 may comprise a sealing member 1210. The sealing member 1210 may be disposed at an edge or a lateral side of the display assembly 1200. The sealing member 1210 may be disposed to surround the edge or the lateral side of the display assembly 1200. For example, the sealing member 1210 may be referred to as a molding member. For example, the sealing member 1210 may have a configuration substantially the same as or corresponding to the protective cover of FIG. 3 (e.g., the protective cover 231 of FIG. 3). The sealing member 1210 may protect a configuration of the display assembly 1200, such as a display panel, from an external impact.

According to an embodiment, the sealing member 1210 may comprise first sealing portions 1212 and 1213 and a second sealing portion 1211. The second sealing portion 1211 may have a configuration substantially the same as the second sealing portion described in FIG. 5 (e.g., the second sealing portion 481 of FIG. 5). The first sealing portions 1212 and 1213 and the second sealing portion 1211 may be integrally formed. The first sealing portions 1212 and 1213 and the second sealing portion 1211 may be coupled to each other by being connected or attached. The first sealing portions 1212 and 1213 and the second sealing portion 1211 may be coupled to form a substantially rectangular or framed shape.

According to an embodiment, the first sealing portions 1212 and 1213 may comprise a first sub sealing portion 1213 and a second sub sealing portion 1212.

According to an embodiment, the first sub sealing portion 1213 may be positioned to overlap a folding axis F of the bending area 1200b. For example, the first sub sealing portion 1213 may be formed symmetrically about the folding axis F.

The second sub sealing portion 1212 may extend from the first sub sealing portion 1213. The second sub sealing portion 1212 may be positioned between the first sub sealing portion 1213 and the second sealing portion 1211.

The first sub sealing portion 1213 and the second sub sealing portion 1212 may be integrally formed. The first sub sealing portion 1213 and the second sub sealing portion 1212 may be coupled to each other by being connected or attached.

According to an embodiment, the second sub sealing portion 1212 may have a higher elastic modulus than that of the first sub sealing portion 1213. For example, the second sub sealing portion 1212 may have a higher modulus value than that of the first sub sealing portion 1213. For example, the second sub sealing portion 1212 may have a higher hardness than that of the first sub sealing portion 1213. As illustrated in FIG. 12B, in order to improve flexibility of the sealing member 1210 positioned around the folding axis F that is bent relatively more when the display assembly 1200 is bent, the first sub sealing portion 1213 may have a lower hardness than that of the second sub sealing portion 1212. For example, the first sub sealing portion 1213 may have a modulus value of 300 MPa or less. For example, the second sub sealing portion 1212 may have a modulus value of 300 MPa to 500 MPa. For example, the second sealing portion 1211 may have a modulus value of 500 MPa to 700 MPa.

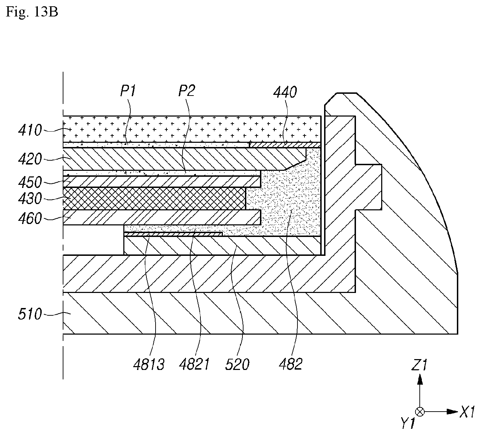

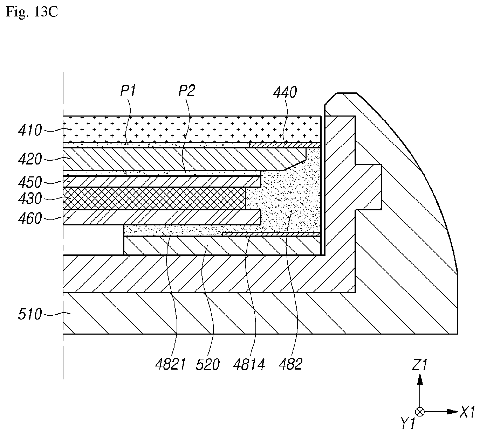

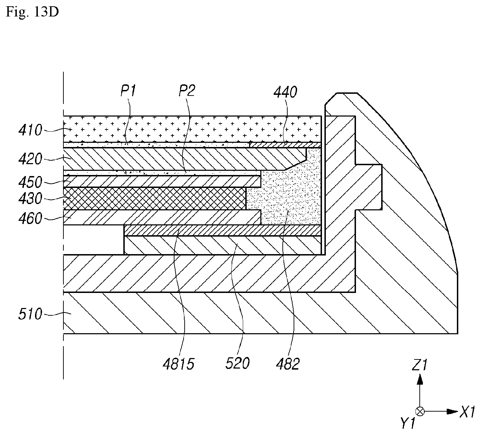

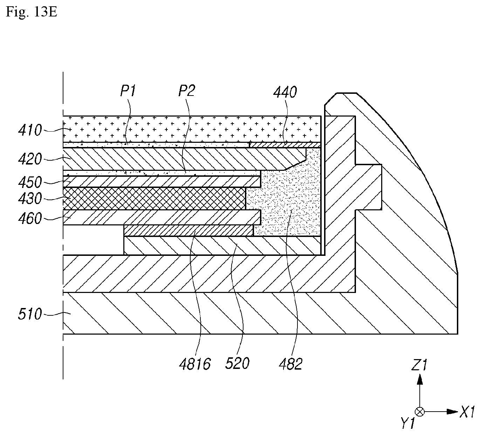

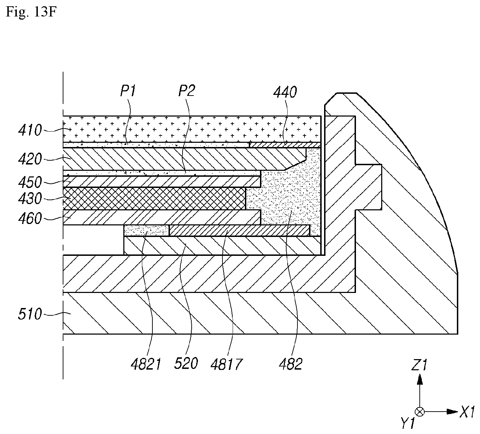

FIGS. 13A, 13B, 13C, 13D, 13E, and 13F are views illustrating a cross section and a peripheral configuration of a display assembly taken along line A-A' of FIG. 5 according to various embodiments.

FIGS. 13A, 13B, 13C, 13D, 13E, and 13F illustrate embodiments partially modified based on FIG. 6. Hereinafter, the same reference numerals are used for configurations substantially the same as the configurations described in FIG. 6.

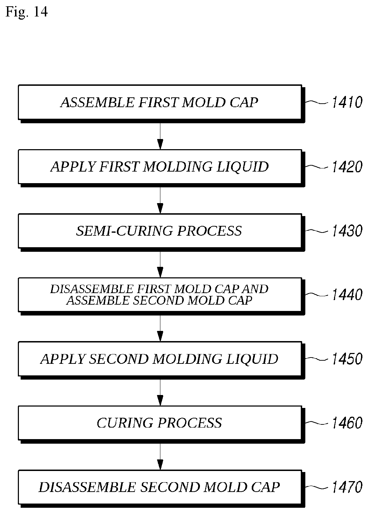

The embodiments of FIGS. 13A, 13B, 13C, 13D, 13E, and 13F may be selectively combined with at least one of the embodiments of FIGS. 1 to 12B and the embodiments of FIGS. 14 to 24.

Referring to FIG. 13A, 13B, 13C, 13D, 13E, or 13F, a portion of the second sealing portion 481 may be disposed at an edge or a lateral side of the bending area 400b of the display assembly 400. According to an embodiment, the second sealing portion 481 may comprise a support portion 4812, 4813, 4814, 4815, 4816, or 4817. The support portion 4812, 4813, 4814, 4815, 4816, or 4817 is a portion of the second sealing portion 481 and may extend along a direction toward the edge of the bending area 400b of the display assembly 400.

According to an embodiment, the support portion 4812, 4813, 4814, 4815, 4816, or 4817 may be in contact with the waterproof member 520. The support portion 4812, 4813, 4814, 4815, 4816, or 4817 may be disposed between the waterproof member 520 and the first sealing portion 482. An upper surface of the support portion 4812, 4813, 4814, 4815, 4816, or 4817 may be in contact with the first sealing portion 482, and a lower surface of the support portion 4812, 4813, 4814, 4815, 4816, or 4817 may be in contact with the waterproof member 520.

A hardness of the support portion 4812, 4813, 4814, 4815, 4816, or 4817 may be greater than a hardness of the first sealing portion 482. In case the first sealing portion 482, which has a relatively lower hardness than that of the support portion 4812, 4813, 4814, 4815, 4816, or 4817, is in contact with the waterproof member 520, the adhesion may not be fully achieved or a gap may be generated due to the low hardness, so that waterproof performance may be degraded. In order to address this, the support portion 4812, 4813, 4814, 4815, 4816, or 4817 is configured to provide improvement with respect to waterproof capability by attaching the support portion 4812, 4813, 4814, 4815, 4816, or 4817, which is a portion of the second sealing portion 481 having a relatively high hardness, to the waterproof member 520.

According to an embodiment, the support portion 4812 may be disposed to overlap an entire area of a lower surface of the first sealing portion 482, as illustrated in FIG. 13A. According to an embodiment, the support portions 4813 and 4814 may be disposed to overlap a partial area of the lower surface of the first sealing portion 482, as illustrated in FIG. 13B or 13C. For example, the support portions 4813 and 4814 may be disposed at a location corresponding to a position where the waterproof member 520 and the sealing member 480 are attached.

The support portion 4815, 4816, or 4817 illustrated in FIGS. 13D, 13E, and 13F may be formed to be thicker than the support portion 4812, 4813, or 4814 illustrated in FIGS. 13A, 13B, and 13C. According to an embodiment, the support portion 4815, 4816, or 4817 may be disposed at a lower side of the first sealing portion 482, as illustrated in FIGS. 13D, 13E, and 13F. One surface of the support portion 4815, 4816, or 4817 may be in contact with the waterproof member 520, and the other surface thereof may be in contact with the polymer member 460. According to an embodiment, the support portion 4815 may be disposed to replace the first part 4821 of the first sealing portion 482, as illustrated in FIG. 13D. According to an embodiment, the support portion 4816 or 4817 may be disposed to replace a portion of the first part 4821 of the first sealing portion 482, as illustrated in FIGS. 13E and 13F.

FIG. 14 is a flowchart for describing a manufacturing process of a display assembly according to an embodiment.

In FIG. 14, a process of manufacturing a sealing member using two types of sealing portions having different physical properties, as described above, is described. The manufacturing process illustrated in FIG. 14 illustrates a process for manufacturing a sealing member (e.g., the sealing member 480 of FIG. 5).

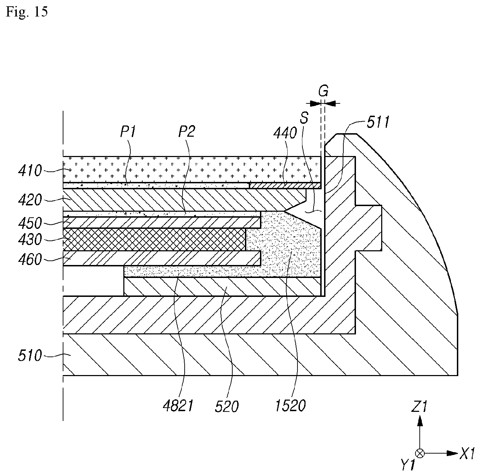

The embodiment of FIG. 14 may be selectively combined with at least one of the embodiment of FIGS. 1 to 13F and the embodiments of FIGS. 15 to 24.

According to an embodiment, the manufacturing process of the display assembly 400 may include a process 1410 of assembling a first mold cap. To manufacture the sealing member 480, a first mold cap for preferentially forming one of a first sealing portion 482 or a second sealing portion 481 may be assembled. For example, the first mold cap may be a mold cap for forming the first sealing portion 482 but is not limited thereto.

According to an embodiment, the manufacturing process of the display assembly 400 may include a process 1420 of applying or injecting a first molding liquid. The first molding liquid may be applied or injected into the first mold cap. Here, the first molding liquid may be a molding liquid corresponding to one of the first sealing portion 482 or the second sealing portion 481. For example, the first molding liquid may be a molding liquid that forms the first sealing portion 482.

According to an embodiment, the manufacturing process of the display assembly 400 may include a semi-curing process 1430. After the application or injection of the first molding liquid to the first mold cap is completed, a process for semi-curing the first molding liquid may be performed. The semi-curing process is a process in which a curing reaction of a material partially proceeds, and upon completion of this process, the semi-cured first molding liquid may be in a state in which it is not completely cured but maintains a specific physical property. Through the semi-curing process, the first molding liquid may be partially cured while adhesiveness remains. By curing the first molding liquid while adhesiveness remains, adhesion to a second molding liquid that is applied or injected in a subsequent process may be improved. Here, at least one of a curing time, a curing temperature, or a UV output applied in the semi-curing process 1430 may be less than that of a thermal curing process 1460 to be described later.

According to an embodiment, the manufacturing process of the display assembly 400 may include a process 1440 of disassembling the first mold cap and assembling a second mold cap. A cooling process may be performed before disassembling the first mold cap. The second mold cap may be a mold cap for forming one of the first sealing portion 482 or the second sealing portion 481. For example, in case the first mold cap is a mold cap configured to form the first sealing portion 482, the second mold cap may be a mold cap configured to form the second sealing portion 481. For example, in case the first mold cap is a mold cap configured to form the second sealing portion 481, the second mold cap may be a mold cap configured to form the first sealing portion 482.

According to an embodiment, the manufacturing process of the display assembly 400 may include a process 1450 of applying or injecting a second molding liquid. The second molding liquid may be applied or injected to the second mold cap. Here, the second molding liquid may be a molding liquid corresponding to one of the first sealing portion 482 or the second sealing portion 481. For example, the second molding liquid may be a molding liquid that forms the second sealing portion 481. The first molding liquid and the second molding liquid may have different physical properties from each other.

According to an embodiment, the manufacturing process of the display assembly 400 may include a curing process 1460. After completing the injection of the second molding liquid, the first molding liquid and the second molding liquid may be cured through the curing process. As the first molding liquid and the second molding liquid are cured, the sealing member 480 may be formed.

According to an embodiment, the manufacturing process of the display assembly 400 may include a process 1470 of disassembling the second mold cap. A cooling process may be performed before removing the second mold cap.

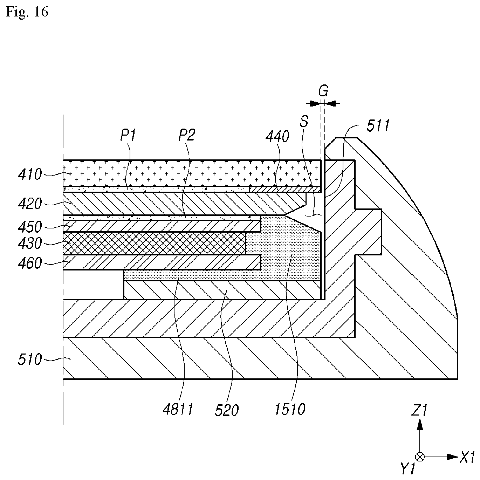

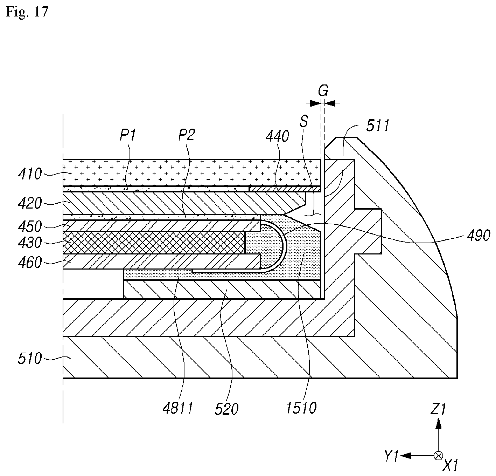

FIG. 15 is a view illustrating a cross section and a peripheral configuration of a display assembly taken along line A-A' of FIG. 5 according to an embodiment. FIG. 16 is a view illustrating a cross section and a peripheral configuration of a display assembly taken along line B-B' of FIG. 5 according to an embodiment. FIG. 17 is a view illustrating a cross section and a peripheral configuration of a display assembly taken along line C-C' of FIG. 5 according to an embodiment.

The embodiments illustrated in FIGS. 15 to 17 may be embodiments in which portions of the embodiments illustrated in FIGS. 6 to 8 are modified. For example, the embodiment of FIG. 15 may be an embodiment in which a portion of the embodiment of FIG. 6 is modified. For example, the embodiment of FIG. 16 may be an embodiment in which a portion of the embodiment of FIG. 7 is modified. For example, the embodiment of FIG. 17 may be an embodiment in which a portion of the embodiment of FIG. 8 is modified.

With respect to the configurations illustrated in FIGS. 15 to 17, the same reference numerals are used for configurations that are substantially identical to the configurations illustrated in FIGS. 6 to 8.

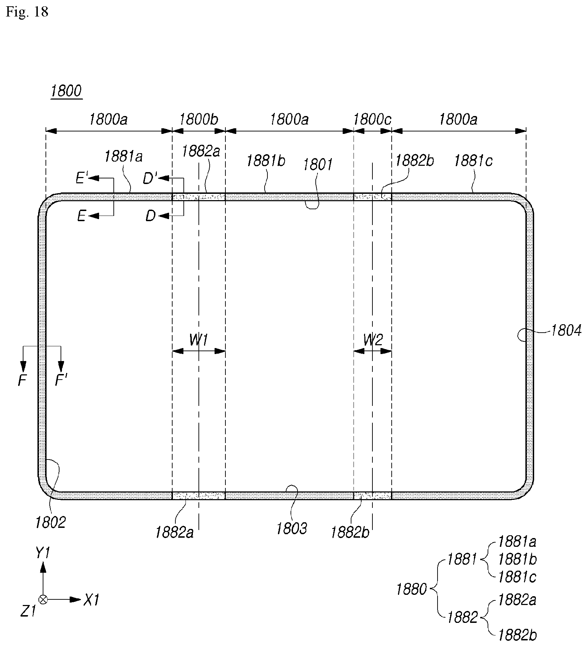

The embodiments of FIGS. 15 to 17 may be selectively combined with at least one of the embodiments of FIGS. 1 to 14 and the embodiments of FIGS. 18 to 24.

Referring to FIGS. 15 to 17, the display assembly 400 may be disposed in a housing 510. Here, the housing 510 may correspond to the first housing of FIG. 2A (e.g., the first housing 210 of FIG. 2A) or the second housing of FIG. 2A (e.g., the second housing 220 of FIG. 2A).

According to an embodiment, the sealing members 1510 and 1520 may include a first sealing portion 1520 and a second sealing portion 1510. Here, the first sealing portion 1520 may correspond to the first sealing portion 482 of FIG. 6. Here, the second sealing portion 1510 may correspond to the second sealing portion 481 of FIG. 7.

According to an embodiment, the sealing members 1510 and 1520 may be disposed to surround at least a portion of an edge or a lateral side with respect to at least one of a polarizing layer 450, the display panel 430, a protective member 410, and a polymer member 460. The sealing members 1510 and 1520 may be disposed to be in contact with an edge or a lateral side of the polarizing layer 450, the display panel 430, and the polymer member 460 as illustrated.

According to an embodiment, the sealing members 1510 and 1520 may be disposed not to be in contact with an edge or a lateral side of a glass member 420. As the sealing members 1510 and 1520 are disposed at the lower side of the glass member 420, a space S may be formed at the lateral side of the glass member 420. The space S may be a space between an inner side surface 511 of the housing 510 of the glass member 420. As such, depending on the specification of an electronic device to be manufactured, the sealing members 1510 and 1520 may be formed to surround only a portion of a plurality of layers constituting the display assembly 400.

FIG. 18 is a plan view of a display assembly according to an embodiment.

The display assembly 400 of FIG. 18 may be included in an electronic device 200 of FIG. 2A. The embodiment illustrated in FIG. 18 may be selectively combined with at least a portion of the embodiments illustrated in FIGS. 6 to 17. According to an embodiment, a display assembly 1800 may have a stacked structure as described in FIG. 4.

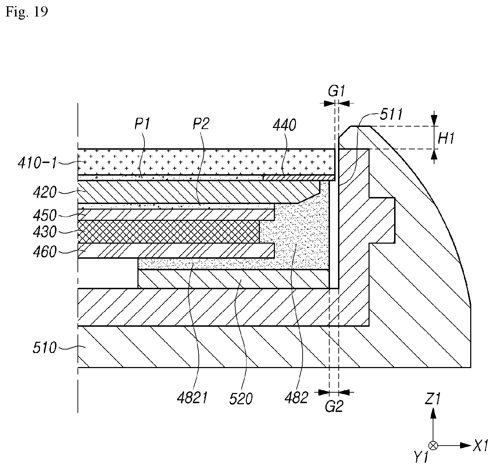

The embodiment of FIG. 18 may be selectively combined with at least one of the embodiments of FIGS. 1 to 17 and the embodiments of FIGS. 19 to 24.

Referring to FIG. 18, the display assembly 1800 may include a sealing member 1880. The sealing member 1880 may form an edge or a lateral side of the display assembly 1800. For example, the sealing member 1880 may be disposed to surround the edge or the lateral side of the display assembly 1800. For example, the sealing member 1880 may be referred to as a molding member or a protective cover. For example, the sealing member 1880 may be a configuration substantially identical to or corresponding to the protective cover of FIG. 3 (e.g., a protective cover 231 of FIG. 3). The sealing member 1880 may protect a configuration inside the display assembly 1800, such as the display panel 430, from an external impact.

According to an embodiment, the sealing member 1880 may be disposed on an outer side of the display panel (e.g., the display panel 430 of FIG. 4). According to an embodiment, the sealing member 1880 may be disposed on the outer side of the polymer member (e.g., the polymer member 460 of FIG. 4). According to an embodiment, the sealing member 1880 may be disposed on the outer side of the glass member (e.g., the glass member 420 of FIG. 4). According to an embodiment, the sealing member 1880 may be disposed on the outer side or the lower side of the protective member (e.g., the protective member 410 of FIG. 4).

According to an embodiment, the display assembly 1800 may include a first edge 1801, a second edge 1802, a third edge 1803, and a fourth edge 1804. The planar shape of the display assembly 1800 may be defined by the first edge 1801, the second edge 1802, the third edge 1803, and the fourth edge 1804. The second edge 1802 may extend in a direction perpendicular to the first edge 1801. The second edge 1802 may be formed shorter than the first edge 1801. The third edge 1803 may extend in a direction perpendicular to the second edge 1802. The first edge 1801 and the third edge 1803 may be parallel to each other. Lengths of the first edge 1801 and the third edge 1803 may be substantially equal. The length of the third edge 1803 may be longer than the length of the second edge 1802. The fourth edge 1804 may extend in a direction perpendicular to the third edge 1803. The fourth edge 1804 may connect the first edge 1801 and the third edge 1803. The fourth edge 1804 may be parallel to the second edge 1802. Lengths of the fourth edge 1804 and the second edge 1802 may be substantially equal.

According to an embodiment, the sealing member 1880 may be disposed at at least one edge of the first edge 1801, the second edge 1802, the third edge 1803, and the fourth edge 1804. For example, the sealing member 1880 may be disposed to surround the first edge 1801, the second edge 1802, the third edge 1803, and the fourth edge 1804.

According to an embodiment, the display assembly 1800 may include bending areas 1800b and 1800c and a non-bending area 1800a. The bending areas 1800b and 1800c may be areas including a folding axis. The sealing member 1880 may be disposed at an edge or a lateral side of the bending areas 1800b and 1800c and the non-bending area 1800a. Here, the non-bending area 1800a may refer to an area that is deformable but is not deformed despite an operation of the electronic device 200 in a state in which the display assembly 1800 is mounted on an electronic device (e.g., the electronic device 200 of FIG. 2A).

According to an embodiment, the bending areas 1800b and 1800c may include a first bending area 1800b and a second bending area 1800c. The first bending area 1800b and the second bending area 1800c may be disposed to be spaced apart from each other. A folding axis of the first bending area 1800b and a folding axis of the second bending area 1800c may be substantially parallel but are not limited thereto.

According to an embodiment, the first bending area 1800b and the second bending area 1800c may have widths of different sizes from each other. A first width W1 of the first bending area 1800b may be greater than a second width W2 of the second bending area 1800c. However, it is not limited thereto, and the sizes of the first width W1 and the second width W2 may be substantially equal.

According to an embodiment, the sealing member 1880 may include a first sealing portion 1882 and a second sealing portion 1881. The first sealing portion 1882 and the second sealing portion 1881 may be integrally formed. The first sealing portion 1882 and the second sealing portion 1881 may be coupled by being connetect or attached to each other. The first sealing portion 1882 and the second sealing portion 1881 may be coupled to form a substantially rectangular or framed shape.

The illustrated coupling form of the first sealing portion 1882 and the second sealing portion 1881 is an example for convenience of description, and the shapes of the first sealing portion 1882 and the second sealing portion 1881 are not limited to those illustrated. Depending on the shape or form factor of the electronic device, various combinations of the first sealing portion 1882 and the second sealing portion 1881 may be configured.

According to an embodiment, the first sealing portion 1882 may be disposed in the bending areas 1800b and 1800c of the display assembly 1800. For example, the first sealing portion 1882 may be disposed to be in contact with an edge or a lateral side of the bending areas 1800b and 1800c of the display assembly 1800. For example, the first sealing portion 1882 may be disposed to surround an edge or a lateral side of the bending areas 1800b and 1800c of the display assembly 1800. For example, the first sealing portion 1882 may be disposed to surround an edge or a lateral side of a portion corresponding to the bending areas 1800b and 1800c in a display panel (e.g., the display panel 430 of FIG. 6). The first sealing portion 1882 may be disposed to protect the edges of the bending areas 1800b and 1800c in the display assembly 1800. However, the present disclosure is not limited thereto, and the first sealing portion 1882 may be disposed at a part of the edge or the lateral side of the bending areas 1800b and 1800c of the display assembly 1800. The first sealing portion 1882 may be disposed at a part of the first edge 1801 and a part of the third edge 1803.

According to an embodiment, the first sealing portion 1882 may comprise a first sub sealing portion 1882a and a second sub sealing portion 1882b. The first sub sealing portion 1882a may be disposed in the first bending area 1800b. The second sub sealing portion 1882b may be disposed in the second bending area 1800c. The physical properties of the first sub sealing portion 1882a and the second sub sealing portion 1882b may be substantially the same but are not limited thereto.

According to an embodiment, the second sealing portion 1881 may extend from the first sealing portion 1882. The second sealing portion 1881 may be disposed in the non-bending area 1800a of the display assembly 1800. For example, the second sealing portion 1881 may be disposed to be in contact with an edge or a lateral side of the non-bending area 1800a of the display assembly 1800. For example, the second sealing portion 1881 may be disposed to surround an edge or a lateral side of the non-bending area 1800a of the display assembly 1800. For example, the second sealing portion 1881 may be disposed to surround an edge or a lateral side of a portion corresponding to the bending areas 1800b and 1800c in a display panel (e.g., the display panel 430 of FIG. 6). For example, the second sealing portion 1881 may be disposed to surround an edge or a lateral side of an area other than the bending areas 1800b and 1800c. The second sealing portion 1881 may be disposed to protect the edge or the lateral side of the non-bending area 1800a in the display assembly 1800.

According to an embodiment, the second sealing portion 1881 may comprise a 2-1st sealing portion 1881a, a 2-2nd sealing portion 1881b, and a 2-3rd sealing portion 1881c. The 2-1st sealing portion 1881a, the 2-2nd sealing portion 1881b, and the 2-3rd sealing portion 1881c may each be disposed in the non-bending area 1800a. The 2-1st sealing portion 1881a, the 2-2nd sealing portion 1881b, and the 2-3rd sealing portion 1881c may be disposed to be spaced apart from each other with the first sealing portion 1882 therebetween. The 2-1st sealing portion 1881a, the 2-2nd sealing portion 1881b, and the 2-3rd sealing portion 1881c may have substantially the same physical properties but are not limited thereto.

According to an embodiment, the first sealing portion 1882 and the second sealing portion 1881 may have different physical properties from each other. The first sealing portion 1882 may be bent together in the event that the display assembly 1800 is bent. The second sealing portion 1881 may not be bent while the display assembly 1800 is bent. Therefore, the first sealing portion 1882 may have physical properties that are easier to bend than the second sealing portion 1881.

According to an embodiment, the first sealing portion 1882 may have a lower elastic modulus than that of the second sealing portion 1881. The first sealing portion 1882 may have a lower elastic resistance than that of the second sealing portion 1881. The first sealing portion 1882 may have a lower modulus value than that of the second sealing portion 1881. The first sealing portion 1882 may have a lower hardness than that of the second sealing portion 1881. The first sealing portion 1882 may have a lower torsional strength than that of the second sealing portion 1881. As described above, by providing a difference in the physical properties of the first sealing portion 1882 and the second sealing portion 1881, the first sealing portion 1882 disposed around the bending areas 1800b and 1800c may be bent together with the bending of the bending areas 1800b and 1800c, thereby reducing the possibility of breakage. The second sealing portion 1881 may have a higher elastic modulus or modulus value than that of the first sealing portion 1882, thereby more robustly protecting an edge portion of the non-bending area 1800a from external impact.

According to an embodiment, the second sealing portion 1881 may have a modulus value of 500 MPa or higher. For example, the second sealing portion 1881 may have a modulus value of 500 MPa to 700 MPa.

According to an embodiment, the first sealing portion 1882 may have a modulus value that is smaller than that of the second sealing portion 1881 by 400 MPa or more. For example, the first sealing portion 1882 may have a modulus value of 300 MPa or less.

According to an embodiment, a cross section taken along line D-D' in FIG. 18 may correspond to FIG. 6 or FIG. 15. According to an embodiment, a cross section taken along line E-E' in FIG. 18 may correspond to FIG. 7 or FIG. 16. According to an embodiment, a cross section taken along line F-F' in FIG. 18 may correspond to FIG. 8 or FIG. 17.

FIG. 19 is a view illustrating a cross section and a peripheral configuration of a display assembly corresponding to line A-A' of FIG. 5 according to an embodiment.

FIG. 19 illustrates an embodiment that is partially modified based on FIG. 6.

For the configuration substantially identical to the above-described configuration with respect to the configurations illustrated in FIG. 19, the same reference numerals are used.

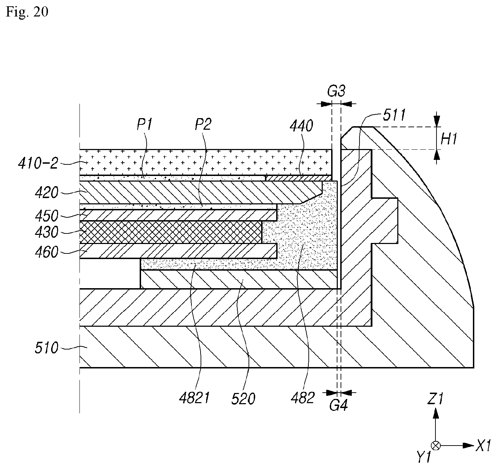

The embodiment of FIG. 19 may be selectively combined with at least one of the embodiments of FIG. 1 to FIG. 18 and the embodiments of FIG. 20 to FIG. 24.

Referring to FIG. 19, a display assembly (e.g., the display assembly 400 of FIG. 5) according to an embodiment may comprise a protective member 410-1. The protective member 410-1 may be disposed on the uppermost layer of the display assembly 400. The protective member 410-1 may be disposed on an upper side of the glass member 420 to protect the glass member 420 from external impact. The protective member 410-1 may protect the glass member 420 from external impact and may help prevent scattering glass fragments in the event that the glass member 420 is broken.

According to an embodiment, gaps G1 and G2 may be formed between the display assembly 400 and the housing 510. The gaps G1 and G2 may comprise a first gap G1 and a second gap G2.

According to an embodiment, the first gap G1 may be a width of a space formed between the protective member 410-1 and an inner side surface 511 of the housing 510. The protective member 410-1 may be disposed to be spaced apart from the inner side surface 511 of the housing 510 by the interval of the first gap G1. The first gap G1 may be formed between an edge of the protective member 410-1 and the inner side surface 511 of the housing 510.

According to an embodiment, the second gap G2 may be a width of a space formed between a sealing member (e.g., the first sealing portion 482) and the inner side surface 511 of the housing 510. The sealing member (e.g., the first sealing portion 482) may be disposed to be spaced apart from the inner side surface 511 of the housing 510 by the interval of the second gap G2. The second gap G2 may be formed between an outer side surface of the sealing member (e.g., the first sealing portion 482) and the inner side surface 511 of the housing 510. In FIG. 19, the space between the first sealing portion 482 and the inner side surface 511 of the housing 510 is referred to as the second gap G2 but is not limited thereto, and the space between a second sealing portion (e.g., the second sealing portion 481 of FIG. 7) and the inner side surface 511 of the housing 510 may also be formed by the second gap G2.

According to an embodiment, the protective member 410-1 may be disposed to protrude toward the inner side surface 511 of the housing 510 more than the sealing member (e.g., the first sealing portion 482). For example, a planar size of the protective member 410-1 may be larger than a planar size of the protective member of FIG. 6 (e.g., the protective member 410 of FIG. 6).

According to an embodiment, the width of the first gap G1 may be smaller than the width of the second gap G2. By forming the width of the first gap G1 to be narrower than the width of the second gap G2, the amount of foreign matter introduced into the space between the sealing member (e.g., the first sealing portion 482) and the housing 510 may be reduced.

FIG. 20 is a view illustrating a cross section and a peripheral configuration of a display assembly corresponding to line A-A' of FIG. 5 according to an embodiment.

FIG. 20 illustrates an embodiment that is partially modified based on FIG. 6.

For the configuration substantially identical to the above-described configuration with respect to the configurations illustrated in FIG. 20, the same reference numerals are used.

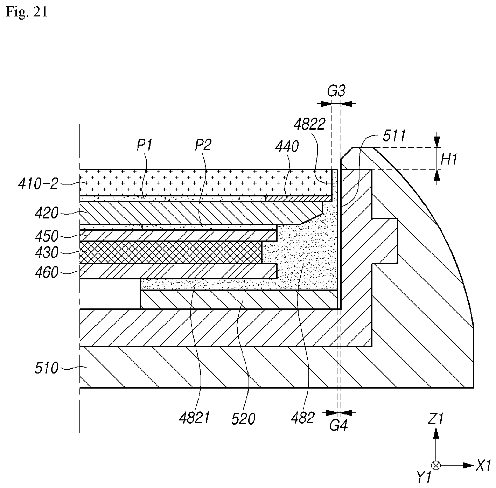

The embodiment of FIG. 20 may be selectively combined with at least one of the embodiments of FIG. 1 to FIG. 19 and the embodiments of FIG. 21 to FIG. 24.

Referring to FIG. 20, a display assembly (e.g., the display assembly 400 of FIG. 5) according to an embodiment may comprise a protective member 410-2. The protective member 410-2 may be disposed on the uppermost layer of the display assembly 400. The protective member 410-2 may be disposed on an upper side of the glass member 420 to protect the glass member 420 from external impact. The protective member 410-2 may protect the glass member 420 from external impact and may help prevent scattering glass fragments in the event that the glass member 420 is broken.

According to an embodiment, gaps G3 and G4 may be formed between the display assembly 400 and the housing 510. The gaps G3 and G4 may comprise a third gap G3 and a fourth gap G4.

According to an embodiment, the third gap G3 may be a width of a space formed between the protective member 410-2 and the inner side surface 511 of the housing 510. The protective member 410-2 may be disposed to be spaced apart from the inner side surface 511 of the housing 510 by the interval of the third gap G3. The third gap G3 may be formed between an edge of the protective member 410-2 and the inner side surface 511 of the housing 510.

According to an embodiment, a fourth gap G4 may be a width of a space formed between a sealing member (e.g., a first sealing portion 482) and an inner side surface 511 of a housing 510. The sealing member (e.g., the first sealing portion 482) may be disposed to be spaced apart from the inner side surface 511 of the housing 510 by the interval of the fourth gap G4. The fourth gap G4 may be formed between an outer side surface of the sealing member (e.g., the first sealing portion 482) and the inner side surface 511 of the housing 510. Although in FIG. 20 the space between the first sealing portion 482 and the inner side surface 511 of the housing 510 is referred to as the fourth gap G4, the present disclosure is not limited thereto, and the space between a second sealing portion (e.g., a second sealing portion 481 of FIG. 7) and the inner side surface 511 of the housing 510 may also be formed by the fourth gap G4.

According to an embodiment, a protective member 410-2 may be disposed to be spaced farther apart from the inner side surface 511 of the housing 510 than the sealing member (e.g., the first sealing portion 482). For example, a planar size of the protective member 410-2 may be smaller than a planar size of a protective member of FIG. 6 (e.g., a protective member 410 of FIG. 6).

By forming the size of the protective member 410-2 to be smaller than that of the protective member of FIG. 6 (e.g., the protective member 410 of FIG. 6) as illustrated in FIG. 20, a contact area between the protective member 410-2 and the sealing member (e.g., the first sealing portion 482) may be reduced. As the contact area between the protective member 410-2 and the sealing member (e.g., the first sealing portion 482) is reduced, breakage of the sealing member (e.g., the first sealing portion 482), or separation thereof in a state of being attached to the protective member 410-2, in the event that the protective member 410-2 is separated from a glass member 420 in order to be replaced, may be minimized.

According to an embodiment, the width of the fourth gap G4 may be smaller than the width of a third gap G3. By forming the width of the fourth gap G4 to be narrow, an amount of foreign matter introduced into the space between the sealing member (e.g., the first sealing portion 482) and the housing 510 may be reduced.

FIG. 21 is a view illustrating a cross section and a peripheral configuration of a display assembly corresponding to the line A-A' of FIG. 5 according to an embodiment.

FIG. 21 illustrates an embodiment partially modified from FIG. 6 and FIG. 20.

Among the configurations illustrated in FIG. 21, the same reference numerals are used for configurations substantially identical to the aforementioned configurations.

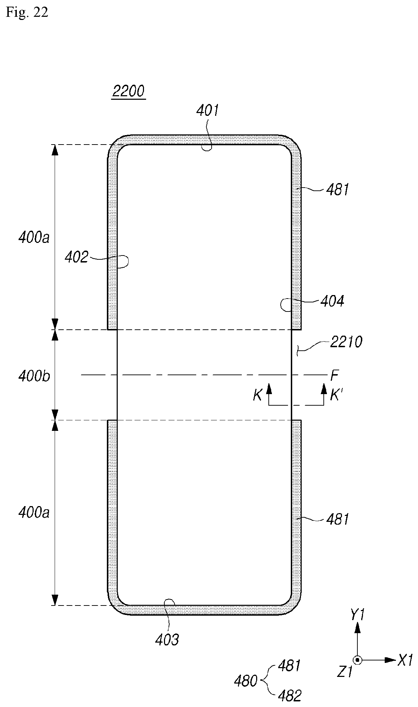

The embodiment of FIG. 21 may be selectively combined with at least one of the embodiments of FIG. 1 to FIG. 20 and the embodiments of FIG. 22 to FIG. 24.

The embodiment of FIG. 21, as compared with the embodiment of FIG. 20, has a difference in the shape of the sealing member (e.g., the first sealing portion 482). Since configurations other than the shape of the sealing member (e.g., the first sealing portion 482) are substantially identical to the configurations of FIG. 20, the description thereof is omitted below.

Referring to FIG. 21, a display assembly according to an embodiment (e.g., a display assembly 400 of FIG. 5) may include the sealing member (e.g., the first sealing portion 482).

According to an embodiment, the sealing member (e.g., the first sealing portion 482) may further include an upper extension portion 4822. The upper extension portion 4822 may extend upward to be in contact with a side surface of the protective member 410-2. The upper extension portion 4822 may be formed to fill at least a portion of the third gap G3. As the upper extension portion 4822 fills at least a portion between the third gap G3, even in the event that the protective member 410-2 is manufactured in a small size due to a manufacturing tolerance, the sealing member (e.g., the first sealing portion 482) may compensate therefor to reduce introduction of foreign matter. In addition, since the upper extension portion 4822 of the sealing member (e.g., the first sealing portion 482) is formed to surround the side surface of the protective member 410-2, the protective member 410-2 may be protected from being broken by foreign matter introduced between the protective member 410-2 and the housing 510.

Although FIG. 21 illustrates the upper extension portion 4822 that extends upward of the first sealing portion 482 and is in contact with the side surface of the protective member 410-2, the present disclosure is not limited thereto, and a second sealing portion (e.g., the second sealing portion 481 of FIG. 7), which is another part of a sealing member 480, may also have a shape corresponding to the upper extension portion 4822 of the first sealing portion 482.

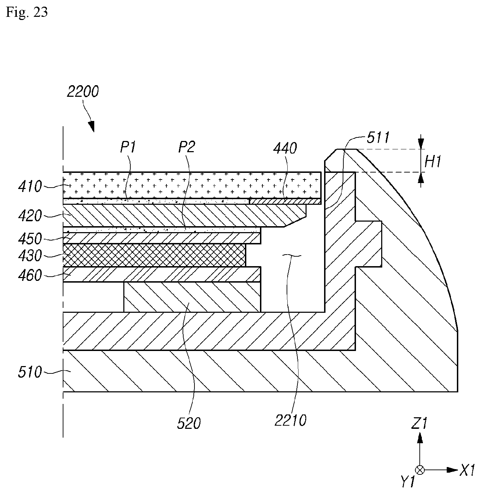

FIG. 22 is a plan view of a display assembly according to an embodiment. FIG. 23 is a view illustrating a cross section and a peripheral configuration of a display assembly taken along the line K-K' of FIG. 22 according to an embodiment.

FIG. 23 illustrates an embodiment partially modified based on FIG. 6.

Among the configurations illustrated in FIG. 22 and FIG. 23, the same reference numerals are used for configurations substantially identical to the aforementioned configurations.

The embodiments of FIG. 22 and FIG. 23 may be selectively combined with at least one of the embodiments of FIG. 1 to FIG. 21 and the embodiment of FIG. 24.

Referring to FIG. 22 and FIG. 23, an electronic device (e.g., an electronic device 101 of FIG. 1 or an electronic device 200 of FIG. 2A, FIG. 2B, and FIG. 3) may include a display assembly 2200.

According to an embodiment, the display assembly 2200 may include a sealing member 481 (or a second sealing portion). The illustrated sealing member 481 may be of a configuration and material substantially identical to a second sealing portion 482 of FIG. 5.

According to an embodiment, the sealing member 481 may be disposed to surround a lateral side of a non-bending area 400a of a flexible display panel. The sealing member 481 may be omitted in a bending area 400b. By omitting the sealing member 481 in the bending area 400b, the display assembly 2200 may be bent more smoothly without resistance formed by the sealing member 481 when bent.

According to an embodiment, the display assembly 2200 may include a non-sealing area 2210. The sealing member 481 may be disposed at a remaining edge portion excluding the non-sealing area 2210. The non-sealing area 2210 may be formed at a portion through which a bending axis F passes. The non-sealing area 2210 may be formed to be symmetrical about the bending axis F.

According to an embodiment, a waterproof member 520 may be attached to the display assembly 400 and the housing 510. The waterproof member 520 may be disposed to seal the space between the display assembly 400 and the housing 510. The waterproof member 520 may be disposed to seal the space between the display assembly 400 and the housing 510 in the bending area 400b. The waterproof member 520 may be adhered to a polymer member 460 in the bending area 400b. In the bending area 400a, the shape of the waterproof member 520 may be substantially identical to a waterproof member of FIG. 7 (e.g., a waterproof member 520 of FIG. 7) and a waterproof member of FIG. 8 (e.g., a waterproof member 520 of FIG. 8).

FIG. 24 is a cross-sectional view of a portion of a display assembly and a peripheral configuration thereof according to an embodiment.

FIG. 24 illustrates an embodiment partially modified based on FIG. 6.

Among the configurations illustrated in FIG. 24, the same reference numerals are used for configurations substantially identical to the aforementioned configurations.

The embodiment of FIG. 24 may be selectively combined with at least one of the embodiments of FIG. 1 to FIG. 23.

Referring to FIG. 24, an electronic device according to an embodiment (e.g., the electronic device 101 of FIG. 1 or the electronic device 200 of FIG. 2A, FIG. 2B, and FIG. 3) may include a housing 510-1. Here, the housing 510-1 may correspond to a first housing of FIG. 2A (e.g., a first housing 210 of FIG. 2A) or a second housing of FIG. 2A (e.g., a second housing 220 of FIG. 2A).

According to an embodiment, an upper end of a side portion of the housing 510-1 may be formed at a height H2 substantially identical to an upper surface of the display assembly 400. The upper end of the side portion of the housing 510-1 may be formed at the height H2 substantially identical to an upper surface of the protective member 410. The upper end of the side portion of the housing 510-1 may be formed so as not to protrude upward from the upper surface of the protective member 410. An upper end of the inner side surface 511 of the housing 510-1 may be formed so as not to protrude upward as compared with the protective member 410. As illustrated, by forming the side portion of the housing 510-1 so as not to protrude upward as compared with the display assembly 400, an overall sense of unity of the electronic device 101, 200 may be formed to improve aesthetics.

An electronic device 101, 200 according to an embodiment may comprise a first housing 210, a second housing 220 rotatably coupled with respect to the first housing 210, and a display assembly 400 disposed on the first housing 210 and the second housing 220 and comprising a bending area 400b that is bent while the electronic device is in a folded state. The display assembly 400 may comprise a flexible display panel, and a sealing member 480 comprising a first sealing portion 482 disposed at a lateral side of the bending area 400b of the flexible display panel and a second sealing portion 481 extending from the first sealing portion 482 along a lateral side of the flexible display panel. An elastic modulus of the second sealing portion 481 may be higher than an elastic modulus of the first sealing portion 482.

According to an embodiment, the second sealing portion 481 may be disposed to surround a lateral side of a non-bending area 400a of the flexible display panel.

According to an embodiment, a boundary surface where the first sealing portion 482 and the second sealing portion 481 come into contact may be inclined with respect to a plane of the display assembly 400.

According to an embodiment, the second sealing portion 481 may comprise a protrusion protruding in a direction toward the first sealing portion 482. The first sealing portion 482 may include a recess formed to receive the protrusion.

According to an embodiment, the first sealing portion 482 and the second sealing portion 481 may be integrally formed.

According to an embodiment, the sealing member 480 may be disposed to be spaced apart from an inner surface of the first housing 210 or the second housing 220.

According to an embodiment, the second sealing portion 481 may have a higher modulus value than that of the first sealing portion 482.

According to an embodiment, the second sealing portion 481 may have a modulus value of 500 MPa to 700 MPa.

According to an embodiment, the first sealing portion 482 may have a modulus value that is lower by 400 MPa than that of the second sealing portion 481.

According to an embodiment, the first sealing portion 482 may comprise a first sub sealing portion positioned to overlap a folding axis of the bending area 400b, and a second sub sealing portion positioned between the first sub sealing portion and the second sealing portion 481 and having a higher elastic modulus than that of the first sub sealing portion.

According to an embodiment, the first sub sealing portion may have a modulus value of 100 MPa or less.

According to an embodiment, the electronic device may further comprise a waterproof member 520 disposed at at least a portion between the first housing 210 and the display assembly 400 or between the second housing 220 and the display assembly 400 and spaced apart from the display assembly 400.

According to an embodiment, the sealing member 480 may be disposed to seal a space between the display assembly 400 and the waterproof member 520.

According to an embodiment, a part of the second sealing portion 481 may be disposed to extend toward the first sealing portion 482 to be in contact with the waterproof member 520.

According to an embodiment, the display assembly 400 may comprise a protective member 410 disposed at the uppermost layer of the display assembly 400. The sealing member 480 may be positioned at a lower side of an edge of the protective member 410.

According to an embodiment, the display assembly 400 may further comprise a printed layer 440 disposed such that the protective member 410 and the sealing member 480 are in contact.

An electronic device according to an embodiment may comprise a display panel 430 at least a portion of which is bendable, a glass member 420 disposed on an upper side of the display panel 430, a protective member 410 disposed on an upper side of the glass member 420, a polymer member 460 disposed on a lower side of the display panel 430, and a sealing member 480 disposed to surround at least a part of an edge with respect to at least one of the display panel 430, the glass member 420, the protective member 410, and the polymer member 460. The sealing member 480 may comprise a first sealing portion 482 and a second sealing portion 481 having a higher elastic modulus than the first sealing portion 482.

According to an embodiment, the first sealing portion 482 may have a modulus value that is lower by 400 MPa or more than that of the second sealing portion 481.

According to an embodiment, a boundary surface where the first sealing portion 482 and the second sealing portion 481 come into contact may be an inclined surface inclined with respect to a plane of the display panel 430.

According to an embodiment, the second sealing portion 481 may comprise a protrusion protruding in a direction toward the first sealing portion 482. The first sealing portion 482 may comprise a recess formed to receive the protrusion.

An electronic device according to an embodiment may comprise a first housing 210, a second housing 220 rotatably coupled with respect to the first housing 210, and a flexible display panel 430 disposed on the first housing 210 and the second housing 220 and comprising a bending area 400b that is bent while the electronic device is in a folded state. It may comprise a sealing member 480 comprising a first sealing portion 482 disposed at a lateral side of the bending area 400b of the flexible display panel 430 and a second sealing portion 481 disposed at a lateral side of a non-bending area 400a, which is an area other than the bending area 400b of the flexible display panel 430. An elastic modulus of the second sealing portion 481 may be higher than an elastic modulus of the first sealing portion 482.

The terms used in the present disclosure are merely used to describe a specific embodiment and are not used with the intention of limiting the present disclosure. For example, a component expressed in the singular should be understood as a concept including a plurality of components unless the context clearly means only the singular. Each of the phrases used in the present disclosure, such as "A or B," "at least one of A and B," "at least one of A or B," "A, B, or C," "at least one of A, B, and C," and "at least one of A, B, or C," may include any one of the items listed together in the corresponding one of the phrases, or all possible combinations thereof. It should be understood that the term "and/or" used in the present disclosure encompasses any and all possible combinations by one or more of the listed items. The terms "comprise," "have," "be composed of," and the like used in the present disclosure are only intended to designate the presence of features, components, parts, or combinations thereof described in the present disclosure, and are not intended to exclude the presence or possibility of addition of one or more other features, components, parts, or combinations thereof by the use of such terms. The expressions "first," "second," and the like used in the present disclosure may modify various components, regardless of order and/or importance, and are only used to distinguish one component from another component and do not limit the components.

The expression "configured to" used in the present disclosure may, depending on the situation, be appropriately used interchangeably with, for example, "suitable for," "having the capacity to," "designed to," "adapted to," "made to," or "capable of." The term "configured to" may not necessarily mean only "specially designed" in terms of hardware. Instead, in some situations, the expression "a device configured to" may mean that the device is "capable of" together with other devices or components. For example, the phrase "a device configured to (or set to) perform A, B, and C" may be a dedicated device for performing the corresponding operation, or may mean a general-purpose device capable of performing various operations including the corresponding operation.

Meanwhile, the terms "upper side," "lower side," and "front-rear direction" and the like used in the present disclosure are defined with reference to the drawings, and the shape and position of each component are not limited by these terms.

Although the foregoing description in the present disclosure has been made centering on specific embodiments, the present disclosure is not limited to such specific embodiments, and should be understood as encompassing all various modifications, equivalents, and/or substitutes of various embodiments.

## Claims

1. An electronic device comprising:
a first housing (210);
a second housing (220) rotatably coupled to the first housing (210); and
a display assembly (400) disposed on the first housing (210) and the second housing (220), and including a bending area (400b) which is bent while the electronic device is in a folded state;
wherein the display assembly (400) includes a flexible display panel and a sealing member including a first sealing portion (482) disposed at a lateral side of the bending area (400b) of the flexible display panel and a second sealing portion (481) extending from the first sealing portion (482) along a lateral side of the flexible display panel, and
wherein an elastic modulus of the second sealing portion (481) is higher than an elastic modulus of the first sealing portion (482).

2. The electronic device of claim 1,
wherein the second sealing portion (481) is disposed to surround a lateral side of a non-bending area (400a) of the flexible display panel.

3. The electronic device of claim 1 or claim 2,
wherein a boundary surface where the first sealing portion (482) and the second sealing portion (481) come into contact is inclined with respect to a plane of the display assembly (400).

4. The electronic device of claim 1 or claim 2,
wherein the second sealing portion (481) includes a protrusion protruding in a direction toward the first sealing portion (482),
wherein the first sealing portion (482) includes a recess formed to receive the protrusion.

5. The electronic device of any one of claims 1 to 4,
wherein the sealing member (480) is disposed to be spaced from an inner surface of the first housing (210) or the second housing (220).

6. The electronic device of any one of claims 1 to 5,
wherein the second sealing portion (481) has a higher modulus value than the first sealing portion (482).

7. The electronic device of any one of claims 1 to 6,
wherein the second sealing portion (481) has a modulus value of 500 MPa to 700 MPa, and
wherein the first sealing portion (482) has a modulus value that is lower by 400 MPa than that of the second sealing portion (481).

8. The electronic device of any one of claims 1 to 7,
wherein the first sealing portion (482) includes a first sub sealing portion positioned to overlap a folding axis of the bending area (400b) and a second sub sealing portion positioned between the first sub sealing portion and the second sealing portion (481), the second sub sealing portion has a higher elastic modulus than that of the first sub sealing portion, and
wherein the first sub sealing portion has a modulus value of 100 MPa or less.

9. The electronic device of any one of claims 1 to 8 further comprising,
a waterproof member (520) disposed at at least a portion between the first housing (210) and the display assembly (400) or between the second housing (220) and the display assembly (400), and the waterproof member (520) is spaced apart from the display assembly (400), and
wherein the sealing member (480) is disposed to seal a space between the display assembly (400) and the waterproof member (520).

10. The electronic device of claim 9,
wherein a portion of the second sealing portion (481) extends toward the first sealing portion (482) and is disposed in contact with the waterproof member (520).

11. The electronic device of any one of claims 1 to 10,
wherein the display assembly (400) includes a protective member (410) disposed at a uppermost layer of the display assembly (400), and
wherein the sealing member (480) is disposed at a lower side of an edge of the protective member (410), and
wherein the display assembly (400) further includes a printed layer (440) disposed in contact with the protective member (410) and the sealing member (480).

12. A display assembly (400) comprising:
a display panel (430) at least a portion of which is bendable;
a glass member (420) disposed on an upper side of the display panel (430);
a protective member (410) disposed on an upper side of the glass member (420);
a polymer member (460) disposed on an lower side of the display panel (430); and
a sealing member (480) disposed to surround at least a portion of an edge of at least one of the display panel (430), the glass member (420), the protective member (410), and the polymer member (460),
wherein the sealing member (480) comprises a first sealing portion (482) and a second sealing portion (481) having a higher elastic modulus than the first sealing portion (482).

13. The display assembly of claim 12,
wherein the first sealing portion (482) has a modulus value that is lower by 400 MPa or more than that of the second sealing portion (481).

14. The display assembly of claim 12 or claim 13,
wherein a boundary surface where the first sealing portion (482) and the second sealing portion (481) come into contact is an inclined surface that is inclined with respect to a plane of the display panel (430).

15. The display assembly of claim 12 or claim 13,
wherein the second sealing portion (481) includes a protrusion protruding in a direction toward the first sealing portion (482),
wherein the first sealing portion (482) includes a recess formed to receive the protrusion.
